(19) Europäisches Patentamt
European Patent Office
Office européen des brevets

(11) EP 3 134 349 B1

(12) **EUROPEAN PATENT SPECIFICATION**

(45) Date of publication and mention of the grant of the patent:
**14.08.2019 Bulletin 2019/33**

(21) Application number: **15724053.2**

(22) Date of filing: **16.04.2015**

(51) Int Cl.:
***C02F 1/28*** *(2006.01)*
***B09C 1/00*** *(2006.01)*
***C02F 1/70*** *(2006.01)*
***E21B 43/38*** *(2006.01)*
***C02F 101/10*** *(2006.01)*
***C02F 101/36*** *(2006.01)*
***C02F 103/06*** *(2006.01)*

(86) International application number:
**PCT/IB2015/052783**

(87) International publication number:
**WO 2015/162527 (29.10.2015 Gazette 2015/43)**

(54) **PROCESS FOR THE CLEAN-UP OF WATERS CONTAMINATED BY CHLORINATED SOLVENTS, NITRATES AND SULFATES**

VERFAHREN ZUR REINIGUNG VON MIT CHLORIERTEN LÖSUNGSMITTELN, NITRATEN UND SULFATEN KONTAMINIERTEM WASSER

PROCÉDÉ POUR LE NETTOYAGE D'EAUX CONTAMINÉES PAR DES SOLVANTS CHLORÉS, DES NITRATES ET DES SULFATES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2014 IT RM20140209**

(43) Date of publication of application:
**01.03.2017 Bulletin 2017/09**

(73) Proprietors:
- **Università degli Studi di Roma "La Sapienza" 00185 Roma (IT)**
- **IEG Technologie Gmbh 73344 Gruibingen (DE)**
- **Sersys Ambiente S.r.l. 10098 Rivoli (TO) (IT)**

(72) Inventors:
- **PETRANGELI PAPINI, Marco I-00166 Roma (IT)**
- **MAJONE, Mauro I-00154 Roma (IT)**
- **BARIC, Massimiliano I-00146 Roma (IT)**
- **PIERRO, Lucia I-75020 Matera (IT)**

(74) Representative: **Currado, Luisa et al
Cantaluppi & Partners S.r.l.
Via XX Settembre 98/G
00187 Roma (IT)**

(56) References cited:
**CN-A- 102 992 479**
**CN-A- 103 709 694**
**US-B1- 6 679 992**

- **"Polyhydroxybutyrate", Wikipedia, 9 April 2014 (2014-04-09), XP055141395, Retrieved from the Internet: URL:http://en.wikipedia.org/w/index.php?title=Polyhydroxybutyrate&oldid=603421302 [retrieved on 2014-09-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 134 349 B1

## Description

### Field of the Invention

The present invention relates to the field of water clean-up and in particular to a process for cleaning-up waters contaminated by chlorinated solvents, nitrates and sulfates. More particularly the process uses polyhydroxyalkanoates as fermentable carbon source, even coupled with zero-valent Iron for degrading chlorinated solvents, nitrates and sulfates.

### Prior Art

Contamination of underground waters by chlorinated solvents

Chlorinated solvents (CS) are one of the most frequent contaminants being detected in the characterization of contaminated sites. CSs are chlorine-substituted hydrocarbon molecules, each of them contains at least one chlorine atom. They can be saturated (alkyl halides), unsaturated (alkenyl halides) or aromatic (aryl halides). Among the alkyl halides, the most common are the ethane and methane derivatives, such as 1,1,1- and 1,1,2-trichloroethane (TCA), 1,1- and 1,2-dichloroethane (DCA), dichloromethane and trichloromethane (chloroform). Among the alkenyl halides, the most common are the ethylene derivatives, such as tetrachloroethylene (PCE), trichloroethylene (TCE) (also known as trieline), 1,2-dichloroethylene (DCE) and chloroethylene, better known as vinyl chloride (VC). Among the aryl halides, the most common are the benzene derivatives, such as chlorobenzene and hexachlorobenzene.
CSs, emitted by a primary source, tend to move by gravity in the unsaturated area towards the underlying aquifer, with a predominant component of vertical movement. Once they reach the surface of the aquifer, since they are comprised of compounds more dense than water and characterized by a poor solubility, they form a separated liquid phase, usually referred to as with the acronym DNAPL (Dense Non Aqueous Phase Liquid), and tend, by gravity, to migrate towards the deep layers, by stratifying in the areas with a lower permeability in a generally unpredictable manner. Thus, during contamination events, CSs would occur as residual phase, entrapped by chemical-physical and/or physical mechanisms within the porous matrix of the soil and not movable by gravity, and as continuous portions accumulated at waterproof layers (pool). Therefore, the continuous flowing of the underground water will cause, following to solubilization processes, the formation of the so-called contamination plume, which would lead each CS to move away from the active source of contamination. When they are dissolved in aqueous phase, the low values of $K_{OC}$ (Soil Organic Carbon-Water Partitioning Coefficient) allow the CSs to be moderately mobile inside the aquifers. As a consequence, CSs often behave as enduring and slow-release sources.
Furthermore, CSs can undergo different chemical or biological reactions and the products of said reactions can result even more toxic than the starting compound.
The main reactions are summarized in the following table 1:

Table 1

| Reaction | Example |
|---|---|
| 1. SUBSTITUTION<br>a) Solvolysis, hydrolysis<br>b) Nucleophilic substitution | <br>$CH_3CH_2Br+H_2O \leftrightarrow CH_3CH_2OH+HBr$<br>$CH_3CH_2Br+HS^- \leftrightarrow CH_3CH_2SH+Br^-$ |
| 2. DEHYDROHALOGENATION | $CCl_3CH_3 \leftrightarrow CCl_2CH_2+HCl$ |
| 3. OXIDATION<br>a) α-Hydroxylation<br>b) Alosil Oxidation<br>c) Epoxidation | <br>$CH_3CHCl_2+H_2O \leftrightarrow CH_3CCl_2OH+2H^++2e^-$<br>$CH_3CHCl_2+H_2O \leftrightarrow CH_3CHClCl^+O^-+2H^++2e^-$<br>$CHClCCl_2+H_2O \leftrightarrow CHClOCCl_2+2H^++2e^-$ |
| 4. REDUCTION<br>a) Hydrogenolysis<br>b) Dihalo-Elimination<br>c) Coupling | <br>$CCl_4+H^++2e^- \leftrightarrow CHCl_3+Cl^-$<br>$CCl_3CCl_3+2e^- \leftrightarrow CCl_2CCl_2+2Cl^-$<br>$2CCl_4+2e^- \leftrightarrow CCl_3CCl_3+2Cl^-$ |

In the CS-contaminated sites, the biological transformation phenomena, essentially processes of reductive dechlorination such as hydrogenolysis and dichlorine-elimination, usually result more relevant than the chemical ones. All of these processes which naturally occur in soils and aquifers and act without the human interference reducing the

mass, toxicity, mobility, volume or concentration of contaminants, are referred to as "Natural Attenuation".
Conversely, in the case of CSs, the chemical-physical mechanisms of attenuation (dispersion, dilution, adsorption and volatilization) only cause a decrease of the migration rate, but they do not change the overall mass of the introduced contaminants, while the biological mechanisms of attenuation can significantly vary both the amount and the quality of the contaminants. In the latter case, a particular danger is given by the possibility of forming degradation products, more toxic and mobile than the starting ones, thereby increasing the risk associated with the introduction of chlorinated solvents in the environment.
The CS movement through the soil and subsoil thus depends on the hydrogeological and microbiological characteristics of the involved site and the chemical-physical ones of the single compound. Therefore, the complex process of CS transport through the subsoil is influenced by several factors and mechanisms widely described in literature (McCarty P. L. and Semprini L. 1994. Ground-water treatment for chlorinated solvents. Handbook of Bioremediation, R. S. Kerr, Ada, pp. 87-116).

Technologies for CS clean-up

Among the technologies for cleaning-up CSs, those requiring large energetic resources for the treatment are defined "Energy Intensive". Among these technologies, Pump and Treat, Air-Sparging, Soil Venting, in-situ Soil Flushing and in-situ thermal desorption are mentioned.

In particular, Pump & Treat consists in detect and pump the overall contamination plume, treat the same in a suitable plant ex-situ and, usually discharge it, as surface body with a high waste of resource and energy. Accordingly, this is a technology which operates only in the saturated area and on the dissolved-phase contaminants. On the other hand, Air-Sparging (AS) and Soil Venting (SVE) exploit the CS volatility by mobilizing them in a gaseous stream, which is next usually treated on-site. They are technologies applied for the removal of residual phases both in the unsaturated (SVE) and saturated areas (AS).

Soil Flushing is used for the removal of contaminants found both in the unsaturated and saturated area as residual phase by flowing water, eventually added of suitable compounds, across the portions of contaminated soil or aquifer for the mobilization of the contaminants which are then intercepted by proper pumping and treatment systems.

In-situ thermal desorption is used for promoting the volatilization of volatile and semi-volatile contaminants and allowing their capture through aspiration systems similar to those used in soil venting.

Besides these technologies, approaches based on the possibility to chemically oxidize or reduce CSs by adding suitable chemicals able to promote such processes are also used. In-situ chemical oxidation, which consists in the injection of strong oxidizing compounds inside the aquifer, eventually with the addition of oxidation catalysts, is applicable to unsaturated organic compounds which are prone to oxidative degradation; in particular permanganate has high removal efficiency in the presence of: chlorinated alkenes (VC, DCE, TCE, PCE), IPA (naphthalenes, phenanthrene, pyrene), phenols, BTEX, whereas in the presence of DNAPL, the reaction times result extremely long. In addition to oxidation, processes of in situ chemical reduction are available which, through the monitoring of the redox conditions of the contaminated matrix by adding chemical compounds, induce the CS degradation through abiotic reductive dechlorination.

Technologies which exploit spontaneous processes, referred to as Natural Attenuation, which occur in soils and aquifers and naturally and spontaneously reduce the mass, mobility, toxicity, volume or concentration of the contaminants are particularly interesting. Said processes, basically of biological nature, are faster than abiotic reactions and mainly contribute to the mass reduction of some kinds of pollutants. Said processes are derived by the combination of chemical-physical phenomena, wherein the presence of natural agents elicits the decay, transformation, immobilization or phase transfer of the contaminant (adsorption, volatilization, ion exchange in the presence of clays, redox reactions with metals, precipitation, etc.); mechanical phenomena, related to the transport and dispersion of the contaminant, which cause a reduction of its concentration by dilution; biological phenomena, connected to the activity of microorganisms naturally occurring in the environment, which can remove, the pollutant compounds by degrading them.

In the techniques based on Natural Attenuation, the ability of specific microorganisms to use these pollutants usually as primary substrate, namely as energy and nutrient source, is exploited. The degradation of a contaminant may also occur by chance through co-metabolism, i.e. by means of enzymes specific for a primary substrate, which accidentally transform a co-metabolic substrate without any energetic benefit.

It is known that halogenated aliphatic hydrocarbons can be subjected to biodegradation under various environmental conditions (Elfantroussi, S., H. Naveau, and S. N. Agathos. 1998. Anaerobic dechlorinating bacteria. Biotechnology Progress 14(2):167-188; McCarty, P. L. 1993. In situ bioremediation of chlorinated solvents. Current Opinion in Biotechnology 4(3):323-330; McCarty, P. L. 1999. Chlorinated organics. Chapter 4 in Anderson, W. C., R. C. Loehr, and B. P. Smith (eds.) Environmental Availability in Soils, Chlorinated Organics, Explosives, Metals. Annapolis, Md.: American Academy of Environmental Engineers ; McCarty P. L. and Semprini L. 1994. Ground-water treatment for chlorinated solvents. Handbook of Bioremediation, R. S. Kerr, Ada, pp. 87-116; Semprini, L. 1997a. In situ transformation of halogenated aliphatic compounds under anaerobic conditions. Pp. 429-450 in Ward, C. H., J. A. Cherry, and M. R. Scalf (eds.) Subsurface Restoration. Chelsea, Mich.: Ann Arbor Press; Semprini, L. 1997b. Strategies for aerobic co-metabolism of chlorinated solvents. Current Opinion in Biotechnology 8(3):296-308 ; C.A. Schanke, L.P. Wackett, Environmental reductive elimination reactions of polychlorinated ethanes mimicked by transition-metal coenzymes, Environ Sci Technol, 26 (1992) 830-833).

The main mechanism of biodegradation under anaerobic conditions is known as "reductive dechlorination" and involves a series of step-wise reductions; in each step the contaminant loses a chlorine atom, which is released in the form of Cl- and replaced by hydrogen. For supporting such a process, the presence of biodegradable organic material, which indirectly acts as electron donor by producing molecular hydrogen or acetate, which are the real donors, is required. However, in the aquifers a high amount of organic substance is not generally found, and moreover the reaction of reductive dechlorination of the contaminant competes with other electron acceptors deriving from hydrogen or acetate (Smatlak C.R., Gosset J.M. and Zinder S.H. (1996). Comparative kinetics of hydrogen utilization for reductive dechlorination of tetrachloroethene and methanogenesis in an anaerobic enrichment culture. Environ. Sci. Technol. 30, pp. 2850-2858; Yang, Y., and P. L. McCarty. 1998. Competition for hydrogen within a chlorinated solvent dehalogenating mixed culture. Environmental Science and Technology 32(22):3591- 3597).

An insufficient concentration of electron donors is the main reason for an often incomplete dechlorination of halogenated aliphatic hydrocarbons.

When reducing the chlorination degree, chlorinated ethenes become more easily biodegradable under aerobic conditions. TCE, DCE, VC are co-metabolically oxidized to carbon dioxide, hydrochloric acid and water by bacteria growing on methane, toluene, ammonia, ethylene, propane. VC is the only one being also degraded through a metabolic process.

However, the aerobic co-metabolism of chlorinated aliphatic compounds is subjected to many limitations. Firstly, the reaction needs molecular oxygen, which could be absent in highly contaminated underground waters. A primary substrate as electron donor is also essential; furthermore, such a substrate should exist at a relatively high concentration in order also to support, in addition to the dechlorination reaction, the microorganism activity (Anderson, J. E., and P. L. McCarty. 1997. Transformation yields of chlorinated ethenes by a methanotrophic mixed culture expressing particulate methane monooxygenase. Applied and Environmental Microbiology 63(2):687-693.; Semprini, L. 1997a. In situ transformation of halogenated aliphatic compounds under anaerobic conditions. Pp. 429-450 in Ward, C. H., J. A. Cherry, and M. R. Scalf (eds.) Subsurface Restoration. Chelsea, Mich.: Ann Arbor Press; Semprini, L. 1997b. Strategies for aerobic co-metabolism of chlorinated solvents. Current Opinion in Biotechnology 8(3):296-308). Due to these requirements, the natural attenuation of chlorinated aliphatic compounds through aerobic co-metabolism is limited.

If the chemical, physical and biological processes, which naturally occur in the soil, cause an overall attenuation of the contamination status, at the times and manners allowed with the use of the site, it is possible to let the decontamination to evolve, monitoring its course. The Monitored Natural Attenuation, MNA consists of a long-term monitoring program, for determining the nature and spatial extent of contaminants, allowing to outline a temporal evolution trend interpreted based on transformation and transport patterns.

Passive clean-up technologies

In the last years, remediation technologies requiring no significant external energy supply for operating were well established. In situ bioremediation processes, such as Enhanced Natural Attenuation and Permeable Reactive Barriers belong to this kind of technologies.

Permeable Reactive Barriers

The Permeable Reactive Barriers PRB consist of an installation of suitable reactive material located inside the aquifer system orthogonally to the flow direction, whereby the contaminated water goes through the barrier due to the natural hydraulic gradient and, when contacted with the reactive means, chemical-physical and/or biological processes are established, which allow to degrade, immobilize or adsorb the contaminant.

PRBs represent an in situ remediation and passive technology, since they do not require an external energy supply, whereas they exploit the natural hydraulic gradient of the aquifer, in order to enable the flowing through the reactive means. They are characterized by limited management costs and permit to passively treat the contamination plume over several years, because the reactive means degrades slowly and the barrier can be periodically restored or replaced. A further advantage consists in the complete use of the natural surface upstream of the contaminated area, which can be maintained productive throughout the entire period of treatment.

In the event of contamination by chlorinated solvents, the most used reactive means is the granular zero-valent iron. The zero-valent iron creates an extremely reducing environment and allows to abiotically perform the reductive dehalogenation of chlorinated aliphatic hydrocarbons by producing ethylene and/or ethane, as final non-toxic products.

The degradation process implies the zero-valent iron corrosion by the halogenated hydrocarbons as the sum of anodic (oxidation) and cathodic (reduction) reactions, which take place over the metal surface.

$$Fe^0 \rightarrow Fe^{2+} + 2\ e^- \qquad \text{(Anodic reaction)}$$
$$R\text{-}X + H^+ + 2\ e^- \rightarrow RH + X^- \qquad \text{(Cathodic reaction)}$$
$$R\text{-}X + Fe^0 + H^+ \rightarrow RH + X^- + Fe^{2+} \qquad \text{(Net reaction)}$$

The redox pair, consisting of metallic iron and Fe2+ ion in solution, has a potential E0= -0.440 V and, in the presence of a proton donor, such as water, is able to reduce the majority of the alkyl halides, the estimated standard potentials of which, related to the half-reaction of reduction, range between +0.5 and +1.5 V at pH=7.

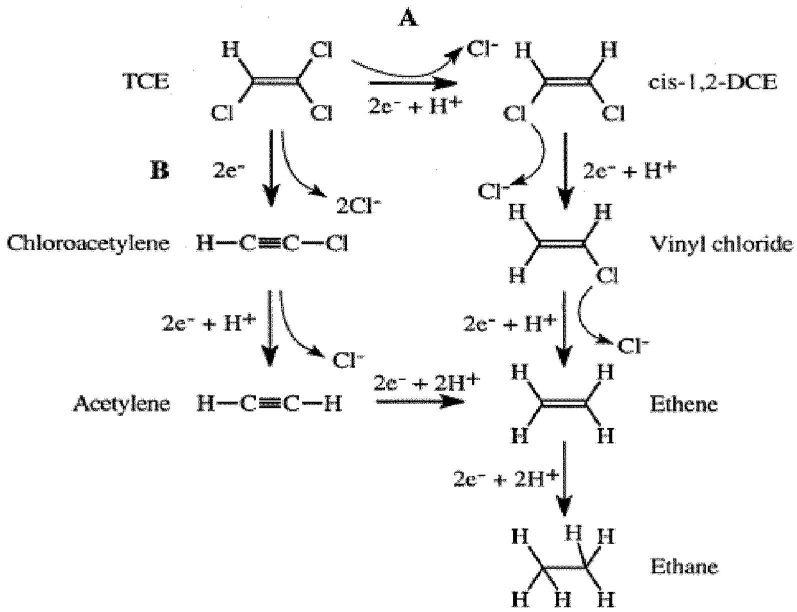


Enhanced Natural Attenuation (ENA)

ENA is based on the opportunity to stimulate the degrading activity of microbial populations found in the site, assuring the establishing of an environment favorable for their growth (Biostimulation of autochthonous microorganisms, naturally occurring in the site) or inoculating particular microbial strains (allochthonous) being selected accordingly to their specific metabolic capabilities (Biogrowth).

In particular, the organic halogenated compounds can be degraded through Biostimulation, by means of metabolic and co-metabolic processes, either in an aerobic or anaerobic environment, by adding readily fermentable carbon substrates, which often result the limiting factor in the natural attenuation processes.

However, the anaerobic bioremediation represent a technology of "partial" removal since that it unlikely enable the complete clean-up due to limiting factors such as slow kinetics, in particular during the final steps of the process, biofouling issues due to the growing of microorganisms near the areas wherein the aquifer is added with electron donors or the occurrence of adverse environmental conditions (pH, Eh, OD, temperature) or abundance of different electron acceptors, which can compete with chlorinated solvents (such as SO42-).

In the case of chlorinated solvents, several studies (Scholz-Muramatsu H., Neumann A., Meßmer M., Moore E. and Diekert, G. 1995. Isolation and characterization of Dehalospirillum multivorans gen. nov., sp. nov., a tetrachloroethene-utilizing, strictly anaerobic bacterium. Arch. Microbiol. 163, 48-56. Gerritse J., Renard V., Pedro Gomes T. M., Lawson P.A., Collins M. D. and Gottschal J. C. 1996. Desulfitobacterium sp. strain PCE1, an anaerobic bacterium that can grow by reductive dechlorination of tetrachloroethene or ortho-chlorinated phenols. Arch. Microbiol., Vol. 165, pp. 132-140. Wild A., Hermann R. and Leisinger R. 1996. Isolation of an anaerobic bacterium which reductively dechlorinates tetrachloroethene and trichloroethene. Biodegradation 7, 507-511. Maymo-Gatell X, Chien Y.T., Gosset J.M. and Zinder S.H. (1997). Isolation of a bacterium that reductively dechlorinates tetrachloroethene to ethene. Science 276, pp. 1568-1571. Holliger C., Hahn D., Harmsen H., Ludwig W., Schumacher W., Tindall B., Vazquez F., Weiss N. and Zehnder A.J.B. 1998. Dehalobacter restrictus gen. nov. and sp. nov., a strictly anaerobic bacterium that reductively dechlorinates

tetra-and trichloroethene in an anaerobic respiration. Arch.Microbiol. 169, 313-321.; Chang Y.C., Hatsu M., Jung,K. Yoo, Y.S. and Takamizawa, K. 2000. Isolation and characterization of a tetrachloroethylene dechlorinating bacterium, Clostridium bifermentans. DPH-1. J. Biosci. Bioeng. 89, 489-491) demonstrated the possibility for using specific microbial strains (belonging to Desulfitobacterium, Dehalobacter, Clostridium, Dehalospirillum, or Dehalococcoides families) capable to carry out a dehalogenation of such compounds until their transformation to non-toxic ethylene and ethane. Said microorganisms act under specific conditions, actually preferring a reducing environment. Furthermore, they require electron donor substrates in order to perform the reductive dechlorination of organic halogenated compounds.

Slow-release carbon sources

The different technologies developed for long-term supporting the biological activity, generally differ based on the kind of organic substrate being used as electron donor and the ways by which it is introduced in the aquifer.

The molecular hydrogen, directly available or derived from fermentation of other primary substrates is the main electron donor being used by dechlorinating microorganisms (DiStefano T.D., Gossett JM and Zinder S.H. (1992). Hydrogen as an electron donor for dechlorination of tetrachloroethene by an anaerobic mixed culture. Appl. Environ. Microbiol. 58, pp. 3622-3629;Smatlak, C. R., J. M. Gossett, and S. H. Zinder. 1996. Comparative kinetics of hydrogen utilization for reductive dechlorination of tetrachloroethene and methanogenesis in an anaerobic enrichment culture. Environmental Science and Technology 30:2850-2858; Komatsu T., Momonoi K., Matsuo T. and Hanaki K. (1994). Biotransformation of cis-1,2-dichloroethylene to ethylene and ethane under anaerobic conditions. Water Sci. Technol., Vol.30, pp. 75-84).

In situ reductive dechlorination can be also supported through the introduction of other soluble electron donors, such as for example readily biodegradable organic acids (lactate, butyrate or propionate). The water dissolution of such compounds causes the transport thereof by the natural flow of the aquifer; accordingly, they should be continuously introduced in the subsoil in order to promote long-term reductive dechlorination reactions. Said drawback can be solved by introducing, within a specific region of the aquifer, slowly biodegradable and completely insoluble polymers such as poly-lactates, poly-alcohols and poly-hydroxyalkanoates.

Poly-hydroxybutyrate (PHB) is a poly-hydroxyalkanoate, highly biodegradable by microorganisms (bacteria and also fungi) existing in the soil, urban and industrial sewage, river estuaries. Said microorganisms use PHB as a form of nutrient accumulation, in order to exploit them during the periods of need. For this aim, they contain suitable secretion enzymes (depolymerases) which adhere to the polymeric particles and catalyze their demolition to simple water-soluble molecules. These molecules, in turn, can be captured and accumulated inside the cells, where they are degraded. The process for using PHB can take place under both aerobic and anaerobic conditions, producing the same intermediates, mainly acetoacetyl-CoA and acetyl-CoA, which enter the metabolic pathways of microorganisms. In the event of a complete degradation, the different conditions lead to different final products, $H_2O + CO_2$ in aerobic environment and $CO_2 + CH_4$ in anaerobic environment.

The biological reaction of PHB degradation comprises two steps: the first is the rapid hydrolysis of PHB to hydroxybutyrate (HB) followed by β-oxidation of HB to acetate and hydrogen:

$$CH_3CH(OH)CH_2COOH \rightarrow 2CH_3COOH + H_2$$

Said reaction is performed by obligate hydrogen-producing acetogenic microorganisms (OPHA) which develop and grow exclusively under anaerobic conditions. Thus, PHB fermentation is not directly carried out by dechlorinating microorganisms, which, on the contrary, exploit the decomposition products of the polymer by using them as electron donors, thus establishing a syntrophic relationship with the several bacterial populations. In a real system, the development of competition mechanisms for exploiting acetate and hydrogen, between dechlorinating microorganisms and acetoclastic methanogens may occur (Aulenta F., Fuoco M., Canosa A., Petrangeli Papini M. and Majone M. 2008. Use of poly-P-hydroxy-butyrate as a slow-release electron donor for the microbial reductive dechlorination of TCE. Water Science and Technology, 57 (6), pp. 921-925).

Water contamination by Nitrates and clean-up technologies

Nitrates are nitric acid salts and represent an essential plant nutrient absorbed by plants from the soil. They are widely naturally occurring compounds and have a high water solubility. They originate in nature from living matter following to degradation processes, mainly by microorganisms, which lead to the production of simple compounds. Nitrates represent the most readily absorbable nitrogen form by the plant root system; once absorbed, nitrates are used for synthesizing complex substances essential for the plant structure and function (proteins, nucleic acids). Nitrates are thus a natural constituent of fruits, vegetables and cereals.

Therefore, nitrates are naturally occurring in the soil, waters and plants. Their presence in foodstuffs and waters

strongly depends by the agricultural techniques being adopted and particularly by the kind of fertilization and the ways by which the latter is carried out. Nitrates are the most oxidized form among the nitrogen compounds and thus represent the final step of biochemical transformations on nitrogen in the presence of oxygen; the nitrogen either supplied to the soil under organic (urea, fertilizers and organic soil conditioners) or ammonia form under favorable conditions (availability of water and high temperatures) is also rapidly converted to nitrates. Therefore, nitrogen supplied by means of fertilizers ensures a high productivity, but it is readily washed away in the nitric form by rain-and irrigation waters. This mainly occurs if the fertilizer amounts being distributed are in excess relative to the real needs of the cultures and the retention capabilities of the soil, especially in the presence of highly permeable soils and abundant rainfalls.

The nitrate pollution of surface and underground waters is further caused by leakages of the sewer systems, the poor management of slurries deriving from treatments of water supply systems, the improper disposal of zootechnical slurries and the undue use of nitrogen fertilizers in agriculture. All of these factors caused, over the time, an excessive increase of the nitrogen amount in the subsoil, and, as a consequence, a pollution of the aquifers. At present, nitrates represent one of the main issues of the water intended for human consumption. As regards the environmental damages caused by an undue release of nitrates in the environment, it is now confirmed that a high nitrate concentration leads to phenomena of eutrophication of the watercourses, lagoons and lakes with a consequent unbalance of the aquatic ecosystem and the development of marine mucilage. The addition of nitrogen bonds in the environment can alter the species composition due to the sensitivity of specific organisms to the effects of nitrogen compounds.

From the point of view of the human health, the consumption of water containing high concentrations of nitrates, or the consumption of foodstuffs prepared with this kind of water, can leads to toxicological issues. However, it has to be noted that, when combining with amines derived from the degrading processes of proteins, they can produce nitrosamines, which are considered cancerogenic agents and other substances with mutagenic activity on DNA. Nitrites can bind blood hemoglobin hindering the oxygenation thereof. When found at high concentrations, they have thus to be considered as toxic.

Possible effects due to a sustained intake of nitrates are connected to the onset of diseases such as methemoglobinemia, like the blue baby syndrome. Furthermore, the nitrate in waters can be naturally converted to nitrite, which is able to provoke tumors of the gastro-intestinal system and liver. In addition, the absorption of high nitrogen concentrations can cause problems to the thyroid gland and lead to a deficit of vitamin A.

Reverse osmosis, ion exchange and electrodialysis are considered the best available technologies for the treatment of waters contaminated by nitrates. However, these technologies do not solve the drawback related to the excess of nitrates in the waters; indeed, flows of concentrated waters are produced, which have to be necessarily treated by means of other technologies, and rise the issue of their supply due to their high salt content. Furthermore, their use leads to severe drawbacks and complications for the direct in situ use aimed to the decontamination of underground waters.

Alternative technological approaches for the treatment of underground waters contaminated by nitrates are chemical reduction, biological denitrification and physical adsorption.

The main problem of the chemical reduction is the stoichiometric production of ammonia (or ammonium ion), which has to be necessarily removed through a further treatment. In this regard, it is possible to use molecular hydrogen combined with a metal catalyst for degrading ammonia to gaseous molecular nitrogen, completely harmless. An in situ chemical reduction process requiring a further treatment for the ammonia removal is not practically used.

Biological denitrification naturally occurs when specific bacteria use nitrate as final electron acceptor in respiration processes in the absence of oxygen. Denitrification consists of a series of reactions. Nitrate is converted to nitrogen through the production of several reaction intermediates, as shown hereinbelow:

$$NO_3 \rightarrow NO_2 \rightarrow NO \rightarrow N_2O \rightarrow N_2$$

Denitrification can occur under both heterotrophic and autotrophic conditions. In the former case, the simultaneous presence of a carbon substrate is required. In the autotrophic pathway there is a need for the presence of sulfur or hydrogen as electron donors for supporting the metabolic cascade. Denitrifying bacteria are ubiquitous in the environment, for this reason such processes spontaneously take place in the aquifers, soil and also, more partially, in the surface waters. Different types of substrate can be used for in situ applications in order to support the biological denitrifying activity and promote the development of specific microbial strains.

In situ treatments are the most cost-effective processes presently available for the removal of nitrates from underground waters. Among the different in situ treatments, a very promising approach is the permeable reactive barriers (PRB). The chemical reduction is usually supported through the use of zero-valent iron, as barrier reactive means. The nitrate ion removal from waters through the use of metals, in particular zero-valent iron, by using commercial granular iron and nanosized iron is also known (G. C.C. Yang, Hsaio-Lan Lee, Chemical reduction of nitrate by nanosized iron: kinetics and pathways, Water. Res., 39 (2005), pp. 884-894). The efficiency of ZVI for reducing nitrate, wherein ZVI removes very rapidly the nitrate at low pH values is well known (Y.H. Huang, T.C. Zhang Effect of low pH on nitrate

reduction by iron powder Water Res., 38 (2004), pp. 2631-2642), but these pH values are poorly reproducible inside the aquifers and inconsistent in presence of ZVI, that usually creates a strongly basic environment. A further drawback is the nearly stoichiometric production of ammonia, which represents another water contaminant, and needs thus of a further treatment (F. Cheng, R. Muftikian, Q. Fernando, N. Korte Reduction of nitrate to ammonia by zero-valent iron, Chemosphere, 35 (11) (1997), pp. 2689-2695). However, it is known that at alkaline pH the removal rate is lower but the ammonia production is not observed. The hydrogen derived from the iron corrosion is potentially able to support the biological denitrifying activity in an anoxic environment (Fenglian Fu, Dionysios D. Dionysiou, Hong Liu, The use of zero-valent iron for groundwater remediation and wastewater treatment: A review, Journal Haz. Mat., Available online 7 January 2014, Yi An, Tielong Li, Zhaohui Jin, Meiying Dong, Qianqian Li, Shuaima Wang, Decreasing ammonium generation using hydrogenotrophic bacteria in the process of nitrate reduction by nanoscale zero-valent iron, Sci. Tot Env, 407, (2009), 21, pp. 5465-5470; B. Gu, D.B. Watson, L. Wu, D.H. Phillips, D.C. White, J. Zhou Microbiological characteristics in a zero-valent iron reactive barrier Environ. Monitoring Assessment, 77 (2002), pp. 293-309).

The biological denitrification is considered the most cost-effective strategy among the various conventional techniques. The heterotrophic denitrification is known (M.A. Gomez, J. Gonzalez-Lopez, E. Hontoria-Garcia, Influence of carbon source on nitrate removal of contaminated groundwater in denitrifying submerged filter, J. Haz. Mat., B, 80 (2000), pp. 69-80; C. Della Rocca, Vi. Belday, S. Meriç, Overview of in-situ applicable nitrate removal processes, Desalination, 204, 1-3, 5 (2007), pp. 46-62) which uses organic compounds as carbon source for the biological activity or by immobilizing microorganisms on inert supports. It is also possible to inject in the subsoil allochthonous microbial strains for promoting the contaminant removal. Biodegradable and/or water-soluble polymers are known as carbon sources (PHV, PHV, PCL) being used in confined environments such as the aquaria (A. Boley, W.R. Müller, G. Haider Biodegradable polymers as solid substrate and biofilm carrier for denitrification in recirculated aquaculture systems Aquacul. Eng., 22 (2002), pp. 75-85; Weizhong Wu, Feifei Yang, Luhua Yang, Biological denitrification with a novel biodegradable polymer as carbon source and biofilm carrier, Biores. Tech., 118, (2012), pp. 136-140).

Till, B.A., Weathers, L.J., Alvarez, P.J.J. Fe(O)-supported autotrophic denitrification. Environmental Science and Technology, 32 (5), pp. 634-639, 1998 describes that ZVI, by producing hydrogen following to the reaction with water, can indirectly support the activity of autotrophic denitrifying bacteria.

Sulfates

Sulfate represents one of those compounds basically always detectable inside waters, both underground waters or surface waters. Sulfates in the waters have different possible origins, either natural or due to the human interference, such as for example the dissolution of gypsums and anhydrides being contacted with underground waters, the circulation in aquifers having a some clay content, anthropic activities, the supply of sea sprays in coastal areas. Furthermore, sulfate is one of the major dissolved components of rainwater. It exists mostly in evaporate sediments such as gypsum ($CaSO_4\ 2H_2O$) or anhydride ($CaSO_4$). Naturally occurring sulfates largely derive from the transformation of natural sulfides. Further main minerals are kieserite ($MgSO_4 \cdot H_2O$), epsomite ($MgSO_4 \cdot 7H_2O$), anglesite ($PbSO_4$) and sodium sulfate ($Na_2SO_4$). An important diffusion carrier of sulfates in the environment are the gaseous emission of sulfur oxides ($SO_2$, $SO_3$), caused by, for example, the usage of fuels for energy use or industrial productions. Among the sulfates with a greatest industrial interest, sodium sulfate ($Na_2SO_4 \cdot 10H_2O$) is used in the glass industry, in dye works and in the manufacturing of cellulose, ammonium sulfate [$2(NH_4)SO_4$] is used as fertilizer, magnesium sulfate ($MgSO_4{\cdot}7H_2O$) is applied in paper and textile industry, calcium sulfate ($CaSO_4{\cdot}2H_2O$) is used in building field and finally copper sulfate ($CuSO_4{\cdot}5H_2O$) is used as fungicide and in electrotyping processes. The sulfate anions are chemically stable in aerated aqueous solutions, whereas under anoxic conditions they are chemically or microbiologically reduced to elemental sulfur (at pH 7) or hydrogen sulfide ions ($HS^-$). The so-called sulfate-reducing bacteria (SRB) are able to naturally metabolize the sulfate contained in the waters, producing gaseous hydrogen sulfide ($H_2S$) as metabolic byproduct, which is toxic for human beings even at low concentrations.

Sulfate is one of the least toxic anions; however, at high concentrations (more than 600 mg/L) can lead to laxative effects, when combined with calcium and magnesium, dehydration and gastrointestinal irritation.

Sulfate confers to water a bitter or medicinal taste if exceeds a concentration of 250 mg/l, which is unpleasant to drink. High sulfate levels can also result corrosive for hydraulic systems, specially for copper pipes.

Usually, three main methodologies are adopted for removing sulfates from waters, in particular for purifying them: reverse osmosis, distillation and ion exchange. The carbon filters, water softeners and sedimentation filters are unable to remove sulfate. The softeners only convert calcium or magnesium sulfate to sodium sulfate, which is more laxative.

Reverse osmosis (RO) is a system for treating water, which removes most of the dissolved elements and chemical products, such as sulfate, from the water by pushing the water through a plastic surface similar to cellophane, known as "semipermeable membrane". Generally, it can remove between 93% and 99% of sulfate contained in drinking water, depending on the kind of device.

Ion exchange is the most known method for removing large sulfate amounts from water, however it is not generally used for treating the individual household supplies. It is a process wherein an element or chemical product is replaced by another. The ion exchange systems for the removal of sulfate exploit a different kind on resin from that usually used for water softening, even if they have a similar operation principle.

In literature few evidences concerning the possible use of ZVI for the partial removal of sulfate from contaminated underground waters are available.

It is known the biological heterotrophic denitrification, which uses organic compounds as carbon source for the biological activity and it is also known that zero-valent iron can support the activity of autotrophic denitrifying bacteria.

As previously described, the use of permeable reactive barriers (PRB) for the nitrate removal from underground waters by means of zero-valent iron as barrier reactive means is known, and the use of ZVI for the sulfate removal was described.

Furthermore, it is known that hydrogen deriving from iron corrosion is able to support the biological denitrifying activity in an anoxic environment.

The coupling of a slow-release carbon source inside a Permeable Reactive Barrier was disclosed; in particular the Zero-Valent Iron was coupled with PHB. Specifically, it was established that PHB fermentation, by forming volatile fatty acids at high concentration and consequent pH reduction, causes a significant increase of the Zero-Valent Iron reactivity, which results in a faster degradation kinetics towards the chlorinated solvents.

In particular, PHB hydrolysis and fermentation were confirmed to occur due to autochthonous microorganisms. The production of volatile fatty acids (VFA) leads to a pH reduction. The combined effect of the acidic environment and the presence of dissolved volatile fatty acids, besides the Zero-Valent Iron reactivity, increases also the durability thereof, since the precipitation phenomena over the surface of the reactive material based on mixed Fe(II) and Fe(III) hydroxides are reduced (Baric et al., 2012, Coupling of polyhydroxybutyrate (PHB) and zero valent iron (ZVI) for enhanced treatment of chlorinated ethanes in permeable reactive barriers (PRBs)Chem. Ing. J., 195-196, 22-30).

In the field of environmental clean-up, specifically of underground waters it is particularly felt the need to develop methods, arrangements and plants which can at the same time cleaning-up from several pollutants, as well as enhancing the efficiency of the cleaning-up process, increasing the easiness of application and reducing the operational costs.

Within the scope of a trial concerning the use of Permeable Reactive Barriers with zero-valent Iron and/or PHB upstream of the contamination source for the clean-up thereof, the same inventors surprisingly found that said method can be used for the concurrent removal of sulfates, besides nitrates, and chlorinated compounds.

At the same time, PHB was observed to have not only the effect to release volatile fatty acids which stimulate the biological dechlorinating activity, as disclosed in "PHB and zero valent iron (ZVI) for enhanced treatment of chlorinated ethanes in permeable reactive barriers (PRBs)" Chem. Ing. J., 195-196, 22-30, 2012, but surprisingly and unexpectedly increases the mobility of chlorinated solvents and consequently reduces the depletion rate of the secondary enduring sources. Therefore, PHB acts as soil conditioner capable to both mobilize contaminants and promote the biological degradability thereof.

It was also demonstrated that the presence of PHB allowed to significantly increase the solubilization of chlorinated solvent sources in DNAPL phase.

Said effect was not deducible from the known prior art, since experimental evidences concerning the use of VFA for enhancing the DNAPL solubilization or the use of carbon release sources for this aim were unavailable in literature.

Surprisingly, it was demonstrated that the effect on the solubilization induced by PHB fermentation is not simply summed up to the already proved ability to stimulate the biological activity, but the coupling of the two processes has a synergic effect greater than that deriving from the sum of each process. This required the designing of a new process for cleaning-up waters contaminated by sulfates, nitrates and chlorinated solvents.

The patents US6679992 and CN103709684 disclose other examples of processes for the clean-up of underground waters contaminated by chlorinated solvents .

**Object of the Invention**

It is an object of the present invention a process for the clean-up of underground waters contaminated by chlorinated solvents, nitrates and sulfates comprising the following steps:

a) extracting the contaminated underground water from the site of contamination
b) contacting the water obtained in step a) with Polyhydroxybutyrate (PHB)
c) returning the water obtained in step b) to the site of contamination

characterized in that steps from a) to c) are carried out in a continuous and cyclic manner until the end of the cleaning-up process,
wherein alternatively to step b) in step b') the water obtained in step a) is simultaneously contacted with Polyhydroxybutyrate (PHB) and a zero-valent iron source.

Optionally prior to step b) or b') the water obtained from step a) in step e) is contacted with sand.

Optionally following to step b) and prior to step c) the water obtained in step b) in step d) is contacted with zero-valent iron.

Further features of the present invention would be evident from the following detailed description with reference to the experimental examples and appended drawings.

**Brief description of the drawings**

Figure 1 shows the trend of PCE concentration in the influent and effluent (a) and the C/CO ratio (A) as a function of the working days, ZVI Connelly column.

Figure 2 shows the trend of PCE concentration in the influent and effluent (b) and the C/CO ratio (B) as a function of the working days, ZVI Gotthart column.

Figure 3 shows the trend of PCE concentration in the influent and effluent (c) and the C/CO ratio (C) as a function of the working days, ZVI-PHB Column.

Figure 4 shows the comparison among the temporal trends of the 1,1,2,2-PCE ratio in the influent and effluent of the three experimental columns.

Figure 5 shows the trends of chloride and sulfate concentration along the column as a function of the heights of the sampling ports, relative to the three experimental apparatuses.

Figure 6 shows the concentration profiles of PCE and byproducts thereof as a function of the residence time.

Figure 7 shows the concentration profiles of PCE, at different working days (ZVI Connelly column).

Figure 8 shows the concentration profiles of PCE, at different working days (ZVI Gotthart column).

Figure 9 shows the concentration profiles of PCE, at different working days (ZVI-PHB Column).

Figure 10 shows the trend of Kobs calculated as a function of the working days.

Figure 11 shows the trend of Kobs calculated as a function of the working days, following to the change of the feed.

Figure 12 shows the trends of VFA and pH relative to the profiles in ZVI-PHB Column.

Figure 13 shows the curve F as a function of t for calculating the residence time.

Figure 14 shows the experimental data and the sigmoid obtained from non-linear regression.

Figure 15 shows the theoretical and experimental solubility of 1,2-DCA and 1,1,2,2-TeCA.

Figure 16 shows the concentration of 1,2-DCA in the effluent of the column as a function of the operation time.

Figure 17 shows the concentration of 1,1,2,2-TeCA in the effluent of the column as a function of the operation time.

Figure 18 shows the comparison between the concentration trends of 1,2-DCA in the effluent, in the absence and presence of VFA.

Figure 19 shows the comparison between the concentration trends of 1,1,2,2-TeCA in the effluent, in the absence and presence of VFA.

Figure 20 shows the outflow 1,2-DCA mass as a function of the working days.

Figure 21 shows the outflow 1,1,2,2-TeCA mass as a function of the working days.

Figure 22 shows the PCE and TCE profiles disclosed as C/CO ratio at different times of the trial.

Figure 23 shows the concentration profiles of NO3 in the different columns as a function of the different hydraulic residence times relative to different moments of the trial: a) Fe-Column, b) Fe/PHB-Column, c) EHC-Column.

Figure 24 shows the trend of removal percentage of nitrate in the three columns as a function of the operation time of the experimental apparatuses.

Figure 25 shows the trend of VFA concentration as a function of the operation time (left axis); the percentage of anion removal, as the sum of nitrate and sulfate, as a function of the operation time. Data are referred only to Fe/PHB-Column.

Figure 26 shows the concentration profiles of sulfate ion along the three columns, referred to different times of the trial. A) Fe-Column; b) Fe/PHB-Column, EHC-Column.

Figure 27 shows the trend of removal percentage of sulfate ion as a function of the operation time of the three experimental apparatuses.

Figure 28 shows a scheme of the arrangement and plant.

## Detailed description of the invention

Definitions

In the present invention by aquifer or underground water is meant waters existing in the saturated area of the soil such as for the example the artesian aquifers and phreatic aquifers.

In the context of the present invention by chlorinated solvents is meant chlorine-substituted hydrocarbons with at least one chlorine atom, saturated (alkyl halides), unsaturated (alkenyl halides) or aromatic (aril halides), such as per example 1,1,1- and 1,1,2-trichloroethane (TCA), 1,1- and 1,2-dichloroethane (DCA), dichloromethane, trichloromethane (chloroform), tetrachloroethene (PCE), trichloroethene (TCE) (trieline), 1,2-dichloroethene (DCE) and chloroethene VC (vinyl chloride), chlorobenzene and hexachlorobenzene.

In the context of the present invention by nitrates is meant the nitrate ion having the formula NO3-.

In the context of the present invention by sulfates is meant the sulfate ion having the formula SO42-.

In the meaning of the present invention by polyhydroxybutyrate PHB is meant the compound having the formula :

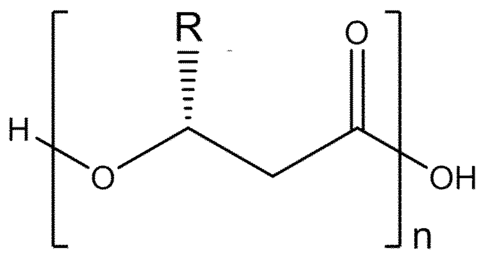

Wherein R, same or different is $CH_3$; $CH_2$-$CH_3$.

In the meaning of the present invention by vertical circulation extraction-return flow well is meant a vertical well provided with openings located at different heights, capable to extract underground water, transport it to an external pipe e, after any treatment, return it to the well at a different opening, thereby creating a hydraulic recirculation area in the aquifer.

Examples of vertical circulation extraction-return flow wells have been disclosed in the patents: EP 0572818, EP 0543358, EP 0490182, EP 0486976, EP 0472967, EP 04337805, EP 0431384, EP 0418572, EP 0418570, EP 347576, EP4950394, EP 0242665.

The object of the present invention comprises

d) extracting the contaminated underground water from the site of contamination
e) contacting the water obtained in step a) with Polyhydroxybutyrate (PHB)

f) returning the water obtained in step b) to the site of contamination

characterized in that steps from a) to c) are carried out in a continuous and cyclic manner until the end of the cleaning-up process, wherein alternatively to step b) in step b') the water obtained in step a) is simultaneously contacted with Polyhydroxybutyrate (PHB) and a zero-valent iron source.

Optionally, prior to step b) or b') the water obtained from step a) in step e) is contacted with sand.

Optionally, after step b) and prior to step c) the water obtained in step b) in step d) is contacted with zero-valent iron.

In a preferred embodiment of the invention the process for degrading sulfates, chlorinated solvents and nitrates in contaminated underground waters contemplates a) extracting the contaminated underground water from the site of contamination b) contacting the water obtained in step a) with PHB c) returning the water obtained in step b) to the site of contamination by performing said steps a) b) c) in a continuous and cyclic manner until the end of the cleaning-up process.

In a preferred embodiment of the invention the process for degrading sulfates, chlorinated solvents and nitrates in contaminated underground waters contemplates a) extracting the contaminated underground water from the site of contamination b') contacting the water obtained in step a) simultaneously with PHB and a zero-valent iron source; c) returning the water obtained in step b') to the site of contamination by performing said steps a) b') c) in a continuous and cyclic manner until the end of the cleaning-up process.

In a preferred embodiment of the invention the process for degrading sulfates, chlorinated solvents and nitrates in contaminated underground waters contemplates a) extracting the contaminated underground water from the site of contamination b) contacting the water obtained in step a) with PHB d) conveying the water obtained in step b) to a reactor containing zero-valent iron as reactive means c) returning the water obtained in step d) to the site of contamination by performing said steps a) b) d) c) in a continuous and cyclic manner until the end of the cleaning-up process.

In a preferred embodiment of the invention the process for degrading sulfates, chlorinated solvents and nitrates in contaminated underground waters contemplates a) extracting the contaminated underground water from the site of contamination b') contacting the water obtained in step a) simultaneously with PHB and a zero-valent iron source d) conveying the water obtained in step b') to a reactor containing zero-valent iron as reactive means c) returning the water obtained in step d) to the site of contamination by performing said steps a) b') d) c) in a continuous and cyclic manner until the end of the cleaning-up process.

In a preferred embodiment of the invention the process for degrading sulfates, chlorinated solvents and nitrates in contaminated underground waters comprises the following steps: a) extracting the contaminated underground water from the site of contamination, e) contacting the water obtained in step a) with sand b) contacting the water obtained in step e) with PHB , returning the water obtained in step b) to the site of contamination by performing said steps a) e) b) c) in a continuous and cyclic manner until the end of the cleaning-up process.

In a preferred embodiment of the invention the process for degrading sulfates, chlorinated solvents and nitrates in contaminated underground waters comprises the following steps: a) extracting the contaminated underground water from the site of contamination, e) contacting the water obtained in step a) with sand b') contacting the water obtained in step e) with PHB and a zero-valent iron source, returning the water obtained in step b) to the site of contamination by performing said steps a) e) b') c) in a continuous and cyclic manner until the end of the cleaning-up process.

In a preferred embodiment of the invention the process for degrading sulfates, chlorinated solvents and nitrates in contaminated underground waters comprises the following steps: a) extracting the contaminated underground water from the site of contamination, e) contacting the water obtained in step a) with sand b) contacting the water obtained in step e) with PHB, d) conveying the water obtained in step b) to a reactor containing zero-valent iron as reactive means c) returning the water obtained in step d) to the site of contamination by performing said steps a) e) b) d) c) in a continuous and cyclic manner until the end of the cleaning-up process.

In a preferred embodiment of the invention the process for degrading sulfates, chlorinated solvents and nitrates in contaminated underground waters comprises the following steps: a) extracting the contaminated underground water from the site of contamination, e) contacting the water obtained in step a) with sand b) contacting the water obtained in step e) with PHB and a zero-valent iron source, d) conveying the water obtained in step b) to a reactor containing zero-valent iron as reactive means c) returning the water obtained in step d) to the site of contamination by performing said steps a) e) b') d) c) in a continuous and cyclic manner until the end of the cleaning-up process.

In a preferred embodiment of the invention the process for degrading sulfates, chlorinated solvents and nitrates in contaminated underground waters comprises the following steps: a) extracting the contaminated underground water from the site of contamination, b) contacting the water obtained in step a) with PHB, recirculating the water obtained in step b) until to reach the desired values, c) returning the water obtained in step b) to the site of contamination by performing said steps a) b) c) in a continuous and cyclic manner until the end of the cleaning-up process.

In a preferred embodiment of the invention the process for degrading sulfates, chlorinated solvents and nitrates

in contaminated underground waters comprises the following steps: a) extracting the contaminated underground water from the site of contamination, b') contacting the water obtained in step a) with a PHB source and a zero-valent iron source, recirculating the water obtained from step b') until to reach the desired values, c) returning the water obtained in step b) to the site of contamination by performing said steps a) b') c) in a continuous and cyclic manner until the end of the cleaning-up process.

More specifically in step a) the contaminated water of the aquifer is pumped outside the aquifer itself and in step b) is contacted with PHB such that the acetogenic microorganisms naturally occurring in the contaminated water start to degrade PHB to acetate and hydrogen, that become available for microorganisms which perform degradation in step c) the water deriving from step b) is returned to the aquifer and the process goes on in a cyclic manner until to obtain the clean-up.

Furthermore, contacting the contaminated water with PHB in step b) also determines an increase of the chlorinated solvent mobilization because PHB acts as soil conditioner capable to mobilizing the contaminants and promoting their biological degradability, as well as of the chlorinated solvents themselves even of inorganic species, such as sulfates and nitrates.

In the event that step b) is replaced with step b') the presence of zero-valent iron along with PHB not only leads to an increase of chlorinated solvent mobilization, but PHB itself increases the zero-valent iron activity because the fermentation products of PHB and the pH decrease cause a reduction of the precipitation of compounds passivating the iron surface, thereby enhancing its long-term reactivity, thus generating a greater synergic action of the two abiotic and biological treatments.

In the case of step d) the presence of fermentation products of PHB and the pH reduction increase the efficiency of the reactor containing zero-valent iron as reactive means, since the precipitation of Iron oxides accumulating on the reactive means surface is reduced, contributing to the formation of a surface layer which causes a slowing down of the degradation reactions.

In the case of step e) the bed of sand acts as filter for the water deriving from step a) by retaining the suspended solids which could reduce the porosity in steps b), b') d).

The method of the present invention allows to enhance, at every cycle, the mobility and bioavailability of the contaminants chlorinated solvents as shown in the following examples.

## Example 1

Material and Methods

The trial was carried out in a laboratory by using continuous-flow experimental systems.

Two kinds of iron were used: Iron Connelly ETI CC-1004, marketed by Connelly GPM, Inc. domiciled in Chicago, Illinois, and iron Gotthart Maier distributed by Gotthart Maier Metallpulver GmbH, domiciled in Rheinfelden, Germany. The iron surface area was calculated as a mean of the values of the surface area of the same kind of iron described in several works existing in literature (D.R. Burris, R.M. Allen-King, V.S. Manoranjan, T.J. Campbell, G.A. Loraine, B. Deng, Chlorinated ethene reduction by cast iron Sorption and mass transfer, Journal of Environmental Engineering, (1998) 1012-1019; VanStone N., Przepiora A., Vogan J., Lacrampe-Couloume G., Powers B., Perez E., Mabury S. and Sherwood Lollar B. 2004; Monitoring trichloroethene remediation at an iron permeable reactive barrier using stable carbon isotopic analysis. Journal of Contaminant Hydrology, 78 (4), pp. 313-325). The value of the calculate surface area is 1.51 $m^2/g$. Typically, oxide traces are present on the iron surface, due to the air exposure. Powdery poly-hydroxybutyrate (PHB) and a copolymer in the form of pellets comprising of poly-hydroxybutyrate and poly-hydroxyvalerate P(HB-HV) (containing PHV 12% by weight, Sigma Aldrich) were also used.

The trial was carried out in a continuous mode, by using laboratory columns of poly-methyl methacrylate (PMMA) with a cylindrical shape. The experimental apparatus being used consisted of three columns, referred to as: ZVI-Connelly Column, ZVI-Gotthart Column, ZVI-PHB Column. Among these, two columns were filled exclusively with a mixture of zero-valent iron (Iron Connelly ETI CC-1004 and Iron Gotthart Maier) and siliceous sand in a proportion of 50% weight/weight. The third column (named ZVI-PHB) was filled with a mixture of ZVI Connelly 10% weight/weight and 3% polyhydroxybutyrate (PHB) in the form of pellets, with a very low percentage of powdery PHB in order to ensure the fast establishing of the anaerobic fermentation of the polymer. The ZVI-PHB mixture was tested for assessing a possible application as carbon source and controlled-release source of electron donors for stimulating, promoting and supporting the biological activity of microbial dechlorinating species already existing in the site. The iron being used was previously screened within a range of particle size comprised between 2 mm and 200 $\mu$m.

In table 2 the relative amounts of the column filling materials are listed.

Table 2

| ZVI Gotthart column | | | |
|---|---|---|---|
| **Column height (cm)** | **Siliceous sand 50% w/w (Kg)** | **Fe Gotthart 50% w/w (Kg)** | **Size screening (μm)** |
| 0 - 6 | 0.796 | 0 | 250-2000 |
| 6 - 41 | 3.10 | 3.12 | 200-2000 |
| 41 - 47 | 0.797 | 0 | 250-2000 |
| | | | |
| **ZVI Connelly column** | | | |
| **Column height (cm)** | **Siliceous sand (Kg)** | **Fe Connelly 50% w/w (Kg)** | **Size screening (μm)** |
| 0 - 6 | 0.785 | 0 | 250-2000 |
| 6 - 41 | 3.00 | 3.05 | 200-2000 |
| 41 - 47 | 0.802 | 0 | 250-2000 |
| **Column ZVI + PHB** | | | |
| **Column height (cm)** | **Siliceous sand (Kg)** | **Fe Connelly 10%+PHB 3% w/w (Kg)** | **Size screening (μm)** |
| 0-10 | 1.33 | 0 | 250-2000 |
| 10-46 | 3.82 | 0.450 of Fe + 0.135 of PHB | 200-2000 |

The fluid dynamic characterization of the system was performed by using a soluble and conservative tracer through a step-wise signal. Thus, the following average fluid dynamic parameters were established: residence time, pore volume, porosity and linear speed. The chloride ion, a substance readily detectable by ion chromatography, which neither interferes with the flow nor interacts with the porous filler was used as tracer. The column was supplied with a NaCl aqueous solution at a concentration of 35 mg/L. The solution was contained inside an auto-collapsing bag Tedlar® and introduced in the column through a peristaltic pump, set at a flow rate of 0.5 mL $min^{-1}$. By using a fraction collector (Gilson Fraction Control 201-202, Gilson, Inc. Middleton, WI, USA) the outflow effluent was sampled in 300 different tubes, each filled with 2 mL aliquot of sample. The chloride ion analysis was performed by ion chromatography. The calculated porosity of the mixture of iron and sand resulted to be 0.37 for "ZVI Connelly" column, 0.33 for "ZVI Gotthart" column and 0.4 for Connelly-PHB column.

The column feed comprised of underground water, transferred inside the tedlar bag and added with PCE for obtaining an inflow concentration efficient for the trial (within a range comprised between ~ 0.3-1 mg $L^{-1}$). The feed flow rate was changed during the trial so that to investigate different ranges of linear speed, that means different residence times. In particular a range of speed comprised between 0.3 and 1.7 m $d^{-1}$, corresponding to a range of residence times comprised between 36 and 6 h was selected. The experimental apparatus was monitored by taking samples of influent and effluent alone (daily sampling) and by takings from side sampling ports (periodical sampling). The sampling was carried out under steady-state conditions of the experimental apparatuses. Through the daily sampling, the trend of the experimental apparatus performance over the time could be assessed, whereas the sample taking from the side ports and thus throughout the height of the column, allowed to monitoring the evolution of the contaminant concentration when varying the residence times (concentration profiles), in order to assess the different kinetics of contaminant degradation and assess the degrading pathways.

The determination of the chlorinated compound concentration in the samples taken from the columns, was carried out by gas-chromatographic analysis of the gaseous phase taken from the vial headspace by using a gas-chromatograph Dani GC 1000, equipped with capillary column and FID detector (Flame Ionization Detector) and provided with headspace autosampler HSS Dani 86.50.

The determination of the ethylene and ethane concentration in the samples was carried out by gas-chromatographic analysis of the vial headspace by using the Varian model 3400 equipped with packed column and FID detector (Flame Ionization Detector). In detail, 500 μL of the gaseous phase taken from the vial headspace are injected before to be analyzed to the Dani GC1000.

The determination of the volatile fatty acids in the samples taken from the columns was carried out through gas-chromatographic analysis by using Master GC-FID. For each analysis 1 μl of a solution prepared in the following way: 500 μL of filtered sample added with 50 μL of oxalic acid solution 0.33 M, as conditioner column, and 50 μL of acrylic acid solution (2 g/L), used as internal standard was injected.

The determination of the anion concentrations was carried out through ion chromatography by using Dionex ICS-1000 IC equipped with a conductivity detector and provided with autosampler Dionex AS40. Each liquid sample was suitably diluted in deionized water.

For the pH measurements, a pH-meter Crison GLP 22 with a glass microelectrode, ceramic diaphragm and encapsulated reference electrode Ag/AgCl was used.

Thus, the software Scientist (Micromath Scientific Software) was utilized for interpolating the experimental data and obtaining the kinetic parameters of the compound removal ($K_{obs}$ and $K_{sa}$).

Tetrachloroethylene (PCE), a substance selected as target contaminant, is degraded by zero-valent iron through hydrogenolysis, β-dichioroeiimination and hydrogenation reactions (in parallel and/or in series) until the production of non-toxic compounds, such as ethylene and ethane. By assuming that the main degradation pathway of chlorinated ethenes on ZVI is, from the kinetic point of view, β-dichloroelimination; acetylene intermediates result particularly instable and are rapidly converted to ethylene and ethane without significant accumulation. The production of vinyl chloride (VC), which is a possible reaction intermediate and verified cancerogenic compound, was never experimentally seen.

The efficiency of zero-valent iron (ZVI) in the contaminant removal through daily samplings of effluent and influent of the experimental apparatuses was assessed. The ZVI reactivity is underlined by reporting the inflow and outflow PCE concentrations from each column as a function of the working days. (Figures 1a, 2b, 3c).

Furthermore, the temporal trend of the ratio between the PCE concentration measured in the effluent (C) and the feed ($C_0$) was disclosed (Figure 1A, 2B, 3C).

The experimental data show the PCE removal extent along each apparatus and further allow to compare the performances of different experimental systems making the result independent from the value of the concentration measured in the influent.

The data show, for all of the three experimental systems, a good reactivity of the zero-valent iron towards Tetrachloroethylene, regardless of the inflow contaminant concentration. During the trial, the PCE concentration in the feed was gradually increased in order to assess the possible effects on the removal extent.

From the disclosed trends it is noted how the contaminant removal, following to a first step wherein is about 99%, stabilizes around a value always greater than 90%. In fact the value of the $C/C_0$ ratio varies around 0,1 thus evidencing the high PCE removal, confirming a good ZVI reactivity during the whole experimental period.

During the operation of the experimental apparatuses, a nearly sustained trend of the $C/C_0$ ratio was observed, although a slightly raising trend of such ratio is observed, which is common for all the three experimental apparatuses, suggesting a progressive, even slow, reduction of the removal efficiency.

Furthermore, no substantive differences over the indicated period are observed, in terms of removal efficiency between the two kinds of ZVI.

To better underline this aspect, in Figure 4 the comparison among the temporal trends of the PCE ratio in the effluent and influent of the three experimental columns is shown.

It is evident that the trends relative to the two systems containing similar percentages of reactive means (ZVI Connelly column and ZVI Gotthart Column) are comparable, as suggested by the overlapping of the relative curves.

Some differences are observed for the column containing PHB, which shows a significant decrease of the efficiency around the fiftieth working day, and then exhibits a practically quantitative removal around the eightieth working day. However, it should be borne in mind that such system contained, relative to the other two systems, a significantly lower percentage of ZVI (10% versus 50% w/w), in addition to the presence of the polymer, the effects of which on the iron reactivity and biological phenomena will be discussed hereinafter.

During the experimental work, the inorganic composition of the underground water was monitored, by characterizing it in terms of anion composition. In fact, it is known that ZVI, throughout the clean-up intervention, usually estimated in years, can undergo phenomena of surface passivation due to the precipitation of Iron (II) and Fe (III) oxy(hydroxy)des, as well as of other species already existing in the aquifer, such as carbonates. Such a phenomenon (aging of the reactive means) leads to a reduction, at times particularly significant, of the reactivity of the filler and, as a consequence, of the installation performance.

In Figure 5 the concentration of chlorides and sulfates (the only two anions detected at significant amounts in the tested water) as a function of the heights of the sampling ports at different working days is shown. It is observed that for the different profiles, no significant variation of the concentration of chlorides dissolved along each experimental apparatus occurred. In this case, no increase of chlorides due to the existing phenomena of reductive dechlorination is detectable because of the high concentration of chlorides in the underground water being used.

As regards sulfates, on the other hand, the experimental results seem to indicate the lack of removal in both the systems containing iron alone, whereas a decreasing trend of the sulfate concentration along the column also

containing PHB is observed. This phenomenon would lead to assume the presence of biological activity, in particular of sulfate-reducing microorganisms, promoted and supported by the release of carbon source and electron donor by the polymer, following to the fermentation thereof.

As regards the results of the concentration profiles, realized by performing periodical samplings along the height of the column, the different heights of each sampling port are indicated as corresponding residence time of the liquid phase within the reactive area of the columns, calculated by knowing the porosity of the filler and the volumetric flow rate of the feed. The conversion of the linear date to residence time allows to establishing the kinetic parameters of degradation typical for the different experimental systems.

In order to better understand the disclosed profiles, it should be kept in mind that the first and the last point are relative to the influent and effluent of the column, whereas the second one (P1) relates to the sampling port located at the layer of sand existing upstream of the reactive area.

It follows that, as it can be observed in the graphs, the data relative to the influent and port P1 are characterized by residence times equal to zero, assuming as time zero that corresponding to the beginning of the reactive filling of the column.

For the sake of example, in Figure 6 the profile relative to the $28^{th}$ working day of ZVI Connelly column is shown. The feed rate was adjusted in order to obtain an average linear speed of about 0.5 m $d^{-1}$. The inflow concentration was set at 680 $\mu$g $L^{-1}$, corresponding to 4,10 $\mu$M.

The experimental data confirm the degradation pathway of PCE by means of ZVI described in literature. Furthermore, a rapid and high removal, which achieves a value around 95%, of the considered contaminant (PCE) is observed. Ethane represents the main final product of the reductive degradation.

During the trial, eight concentration profiles for each experimental apparatus, under different operational conditions were realized.

Each profile is representative of a different condition of linear speed of the barrier crossing. The different crossing speeds were previously detected within a range usually found in a real site, i.e. 0.3-1.7 $md^{-1}$.

In Tables 3, 4 and 5 the experimental conditions of each test relative to the three experimental apparatuses, ZVI Connelly column, ZVI Gotthart column and ZVI-PHB Column, respectively, are disclosed.

Table 3

| Profile | $W^*$ (ml/min) | $\tau^*$ (h) | $v^*$ (m/d) | $[PCE]_{in}$ ($\mu$g/l) |
|---|---|---|---|---|
| 11 Working Day | 0.68 | 29.33 | 0.38 | 360 |
| 21 Working Day | 1.16 | 17.20 | 0.645 | 470 |
| 28 Working Day | 1.04 | 18.19 | 0.58 | 680 |
| 40 Working Day | 1.46 | 13.66 | 0.81 | 582 |
| 54 Working Day | 1.48 | 13.48 | 0.82 | 581 |
| 63 Working Day | 1.88 | 10.61 | 1.04 | 678 |
| 75 Working Day | 2.31 | 8.63 | 1.28 | 1002 |
| 82 Working Day | 3.11 | 6.41 | 1.73 | 810 |
| *W=flow rate; $\tau$ =hydraulic residence time; v=linear speed | | | | |

Table 4

| Profile | $W^*$ (ml/min) | $\tau^*$ (h) | $v^*$ (m/d) | $[PCE]_{in}$ (□g/l) |
|---|---|---|---|---|
| 11 Working Day | 0.61 | 36.66 | 0.302 | 325 |
| 21 Working Day | 1.15 | 19.45 | 0.57 | 568 |
| 28 Working Day | 1.21 | 18.48 | 0.60 | 638 |
| 40 Working Day | 1.45 | 15.42 | 0.72 | 503 |
| 54 Working Day | 1.53 | 14.62 | 0.76 | 624 |
| 63 Working Day | 1.67 | 13.39 | 0.83 | 868 |
| 75 Working Day | 2.17 | 10.31 | 1.08 | 957 |

(continued)

| Profile | W* (ml/min) | τ* (h) | v* (m/d) | [PCE]$_{in}$ (□g/l) |
|---|---|---|---|---|
| 82 Working Day | 3.06 | 7.31 | 1.52 | 856 |
| W=flow rate; τ =hydraulic residence time; v=linear speed | | | | |

Table 5

| Profile | W* (ml/min) | τ* (h) | v* (m/d) | [PCE]$_{in}$ (μg/l) |
|---|---|---|---|---|
| 11 Working Day | 0.72 | 33.44 | 0.33 | 351 |
| 21 Working Day | 1.33 | 18.10 | 0.61 | 524 |
| 28 Working Day | 1.37 | 17.57 | 0.63 | 733 |
| 40 Working Day | 1.51 | 15.94 | 0.69 | 888 |
| 55 Working Day | 1.68 | 14.33 | 0.77 | 676 |
| 63 Working Day | 1.97 | 12.22 | 0.90 | 733 |
| 75 Working Day | 2.38 | 10.11 | 1.09 | 1.081 |
| 82 Working Day | 3.04 | 7.92 | 1.39 | 796 |
| *W=flow rate; τ =hydraulic residence time; v=linear speed | | | | |

In figures 7, 8 and 9 the different concentration profiles of PCE in terms of concentration normalized to the initial concentration are disclosed, the interpolation curves obtained from non-linear regression of the experimental data according to the first order kinetic model, usually adopted for characterizing the transformations of organic halogenated compounds on zero-valent iron are also disclosed:

$$-\frac{d[C]}{dt} = k_{obs} * [C]$$

wherein C represents the concentration of the tested compound, t the time and $K_{obs}$ an apparent kinetic constant ($h^{-1}$), which depends from the iron concentration being used.

In figures 7, 8 and 9 it is observed that the simulated curves obtained from the non-linear regression of the data show in all the cases a good coherence with the experimental trend of the concentration for each experimental system. This substantiates the validity of the assumption of the first order kinetics as an interpretative model of the reductive dechlorination of PCE by ZVI.

The so-obtained concentration profiles were then used for calculating the apparent kinetic constant of degradation $K_{obs}$ and the specific constant ($K_{sa}$).

La apparent kinetic constant of degradation can, in fact, be expressed according to the following equation:

$$K_{obs} = K_{sa} \rho_{sa}$$

wherein $K_{sa}$ is the first order specific constant in [L $h^{-1}$ $m^{-2}$] and $\rho_{sa}$ is the concentration of the iron surface area expressed in [$m^2$ $L^{-1}$].

From this equation $K_{obs}$ is inferred to depend from the iron percentage in the filler; therefore, the $K_{sa}$ has to be calculated for the extrapolation of the behavior at several iron concentrations.

In Table 6 the values of the kinetics constants optimized through non-linear regression of the data for the three experimental apparatuses are listed.

Table 6

| | ZVI Connelly | | ZVI Gotthart | | Connelly - PHB | |
|---|---|---|---|---|---|---|
| **Working Day** | $K_{sa}$* L/(h*m$^2$) | $K_{obs}$* h$^{-1}$ | $K_{sa}$* L/(h*m$^2$) | $K_{obs}$* h$^{-1}$ | $K_{sa}$* L/(h*m$^2$) | $K_{obs}$* h$^{-1}$ |
| 11 | 1.63 $10^{-4}$ | 8.8$10^{-1}$ | 1.47 $10^{-4}$ | 8.8$10^{-1}$ | 8.9 $10^{-4}$ | 6.1 $10^{-1}$ |
| 21 | 9.62 $10^{-5}$ | 5.2 $10^{-1}$ | 8.5 $10^{-5}$ | 5.2 $10^{-1}$ | 6.8 $10^{-4}$ | 4.7 $10^{-1}$ |
| 28 | 6.09 $10^{-5}$ | 3.3 $10^{-1}$ | 5.45 $10^{-5}$ | 2.9 $10^{-1}$ | 3.46 $10^{-4}$ | 2.3 $10^{-1}$ |
| 40 | 6.91 $10^{-5}$ | 4.0 $10^{-1}$ | 6.68 $10^{-5}$ | 4.0 $10^{-1}$ | 1.85 $10^{-4}$ | 1.3 $10^{-1}$ |
| 55 | 7.3 $10^{-5}$ | 4.2 $10^{-1}$ | 3.67 $10^{-5}$ | 2.2 $10^{-1}$ | 1.14 $10^{-4}$ | 0.8 $10^{-1}$ |
| 63 | 6.10 $10^{-5}$ | 3.5 $10^{-1}$ | 8.18 $10^{-5}$ | 4.9 $10^{-1}$ | 3.2 $10^{-4}$ | 2.2 $10^{-1}$ |
| 75 | 9.33 $10^{-5}$ | 5.4 $10^{-1}$ | 1.40 $10^{-4}$ | 8.4 $10^{-1}$ | 4.45 $10^{-3}$ | 3.05 |
| 82 | 1.3 $10^{-4}$ | 7.8$10^{-1}$ | 3.1 $10^{-4}$ | 1.85 | 5.54 $10^{-3}$ | 3.8 |
| **Minimum Value** | 6.09 $10^{-5}$ | **3.3 $10^{-1}$** | 3.67 $10^{-5}$ | **2.2 $10^{-1}$** | 1.14 $10^{-4}$ | **0.8 $10^{-1}$** |
| **Maximum Value** | 1.63 $10^{-4}$ | **8.8 $10^{-1}$** | 3.1 $10^{-4}$ | **1.85** | 5.54 $10^{-3}$ | **3.8** |
| *$K_{sa}$ = specific kinetic constant; $K_{obs}$ = apparent kinetic constant | | | | | | |

From data reported in Table 6 it is clear that the two experimental systems, only containing a mixture of sand and ZVI, show for the most of the experimental period an apparent constant, $k_{obs}$, greater than that shown for the system also containing PHB. However, as previously stated, this constant is strongly dependent from the amount of reactive material being used, that in this case is markedly greater in the two systems containing ZVI alone. As expected, such value tends, throughout the operation period of the apparatuses, to decrease, then stabilizing at a minimum value which usually maintains quite constant over the time. In the described specific case, on the other hand, a clear increase of the reactivity, starting from a specific point onwards is observed, said phenomenon will be more widely discussed hereinbelow.

If the specific kinetic constants of the three systems, $k_{sa}$ are compared, the system containing PHB is observed to reveal a reactivity always greater than the other two systems, even during the operation period preceding the general increase of reactivity. This would seem to be attributable just to the presence of the polymer, allowing to obtain, among the various effects, a greater specific reactivity of the reactive means.

In Figure 10 the trend of the apparent kinetic constant when varying the operation time of the three experimental apparatuses is shown. As above said, at $57^{th}$ working day of the experimental apparatuses, a significant variation of the trend of the apparent kinetic constant is observed. Such phenomenon is likely imputable to the change of the feed, deriving from a different piezometer; this caused an evident effect on the experimental apparatus operation. As it is clearly set forth in Figure 11, all the systems have significantly accelerated kinetics of degradation and the ZVI-PHB column shows the most pronounced increase. The observed increase of the reactivity results even more significant, if considering that the analyzed tests are those performed at the most high linear speed of column crossing, corresponding to the shorter residence time.

The observed behavior cannot be imputable to a different inorganic composition of the feeding water being used, as set forth in Figure 5. The analyses of chlorides and sulfates, which are the mainly occurring anions, indicate a complete overlap of both the waters.

Also the contaminant concentration seems to be unable to explain the different observed behavior.

A likely explanation is the presence of dechlorinating microorganisms existing at a concentration significantly greater in the water used for feeding the system starting from the $57^{th}$ day. The biological dechlorinating activity is thus summed up to that already carried out by the zero-valent iron.

Furthermore, this hypothesis accounts for the greater increase of removal observed specifically in the column containing PHB, wherein the presence of the polymer is able to support and promote the biological dechlorinating activity in a significantly greater extent relative to ZVI alone.

Considering that the ZVI-PHB Column contains an iron concentration 5-folds lower than the other two systems, the obtained increase of the experimental system reactivity is really fundamental. This behavior can be related to the release of volatile fatty acids (VFA), such as acetic and butyric acids, produced by the anaerobic fermentation of poly-hydroxybutyrate, promoted by the reducing environment created by the corrosion of the zero-valent iron.

In Figure 12 the pH and concentration profiles of the overall volatile fatty acids (the sum of acetic and butyric acids) determined at different working days in the ZVI-PHB column are shown.

From the VFA trends, relative to different concentration profiles, it can be seen that the production of acids begins immediately after the starting of the system. In fact, just after 11 working days, a marked production of volatile fatty acids reaching a maximum concentration, equal to 180 mg $L^{-1}$, after 28 working days of the column is observed.

Next, the concentration tends to stabilize at around 30 mg $L^{-1}$.

This is the result of the fast initial fermentation of PHB due to the presence of a small powdery fraction (characterized by a high specific surface, namely a high fermentation rate), which, once depleted, leaves active in the fermentation only the pellet fraction. The latter, being characterized by a smaller specific surface, enables a slower and more controlled release of the fermentation products.

The production of acids causes an increase of the iron reactivity following to simultaneous effects, such as the lowering of the pH and the possible complexation of the iron by the released fatty acids, which entail a greater activity of the surface of the reactive means preventing or limiting the precipitation of solids which may passivate the surface by forming less conductive layers.

From a general point of view, it can be noted that the experimental data observed for each of the three investigated conditions (Iron Connelly (50%), Iron Gotthart Maier (50%) and Iron Connelly (10%)-PHB (3%)), were kinetically well representable through a first order model.

## Example 2

### Materials and methods

The trial was carried out in a laboratory by using continuous-flow experimental apparatuses, specifically implemented for simulating a portion of reactive permeable barrier.

The experimental apparatus consisted of 3 laboratory columns of poly-methyl methacrylate (PMMA).

Two columns were filled with a mixture of siliceous sand and zero-valent iron (Gotthart Maier, Gotthart Maier Metallpulver GmbH, Germany) at 50% by weight. In one of the two columns was also added a small fraction of PHB as slow-release carbon source. The PHB fraction being added corresponded overall to 3% by weight of the mixture, and was comprised of 0.12 g of powder and 120 g of pellets. Hereafter the two columns will be indicated as Fe-Column and Fe/PHB-Column, respectively. The third column, on the other hand, contained a mixture of sand and EHC®, a commercial product patented and marketed by FMC; hereafter it will be indicated as EHC-Column. The product was added to the mixture of sand at 1% by weight.

In Table 10 the average composition of the product is disclosed. In detail, it is a solid material formed by microsized ZVI, with a high surface development, a readily biodegradable organic fraction and part of nutrients for the development of the biological activity in the aquifer. It is a product marketed for the clean-up of underground waters, in particular for the treatment of chlorinated ethenes and ethanes. It is usually used as fluid suspension with a high solid content, having a mud-like consistency, and suitably injected in the aquifer, performing at the same time a strong chemical reduction of the pollutants as well as a biological stimulation.

In Table 9 the composition of the filler of the three columns is disclosed:

Table 9

| | Fe-Column | Fe/PHB-Column | EHC-Column |
|---|---|---|---|
| ZVI (Kg) | 2.1 | 2.0 | --- |
| Sand (Kg) | 2.15 | 2.0 | 3.0 |
| PHB pellets (g) | --- | 120.13 | --- |
| PHB powder (g) | --- | 0.12 | --- |
| EHC (g) | --- | --- | 30.05 |

Table 10

| EHC® characteristic | |
|---|---|
| Fe % weight | 18 - 48 |
| Organic carbon fraction % weight | 52 - 82 |

Each column was equipped with ten side sampling ports provided with a mininert™ valve (VICI, Schenkon,

CH) connected to a steel tube provided with openings along the entire diameter of the column, thereby allowing a significant sampling of the full section of the column. The experimental apparatuses were fed from the bottom in a continuous manner through a multi-channel peristaltic pump. During the first 180 working days a real underground water, deriving from a contaminated site was used. In the next 100 days a pipeline network water being added with contaminants of interest, NaCl, $Na_2SO_4$ and $NaNO_3$ as inorganic contaminants, and PCE and TCE as regards the organic contamination was used. At the end of this step the feeding of the experimental apparatuses was again carried out with underground water until the end of the trial. Both the feed solutions were stored in auto-collapsing bags, consisting of Tedlar®, (SKC, Dorset, UK). During the trial, several feed rates were analyzed in order to assess the effects of the variation of the linear speed on the general removal performance.

The influent and effluent from the different columns were frequently sampled, while the side sampling throughout the heights of the columns was periodically carried out, with a wider temporal range. The position of each sampling port was converted to hydraulic residence time through the knowledge of the feed rate and the porosity of the filler, previously assessed by performing a test with a conservative tracer.

Each sample was successively analyzed for determining the following analytical parameters: concentration of chlorinated solvents, concentration of volatile fatty acids, VFA (acetic acid and butyric acid), concentrations of inorganic anions and measurement of the pH value.

The determination of the chlorinated compound concentration in the samples taken from the columns, was carried out through gas-chromatographic analysis of the gaseous phase taken from the vial headspace by using a gas-chromatograph Dani GC 1000, equipped with capillary column and FID detector (Flame Ionization Detector) and provided with a headspace autosampler HSS Dani 86.50.

The determination of the volatile fatty acids in the samples taken from the columns was carried out through gas-chromatographic analysis by using Master GC-FID. The determination of the anion concentrations was performed through ion chromatography by using Dionex ICS-1000 IC equipped with conductivity detector and provided with autosampler Dionex AS40.

For the pH measurements, a pH-meter Crison GLP 22 with a glass microelectrode, ceramic diaphragm and encapsulated reference electrode Ag/AgCI was used.

Thus, during the trial the efficacy of a commercial zero-valent iron in the simultaneous removal of both chlorinated solvents and organic contaminants, nitrate ion and sulfate ion, in the presence or not of a biodegradable polymer, PHB, which acts as carbon source was compared. The aim of PHB was to promote and support the biological activity of bacterial species already existing in the underground water. Furthermore, the two experimental systems were compared with a commercial product, EHC, specifically formulated and distributed for removing chlorinated solvents in an aquifer, both abiotically and through the simultaneous stimulation of the biological dehalogenating activity. In addition to the dechlorinating microbial population, other populations, such as sulfate-reducer, denitrifiers, methanogens and all those bacteria which operate under conditions similar to those of reductive dechlorination and benefit from the release of substrates in the aquifer, are also subjected to the stimulation induced by EHC. For all the three implemented systems, the efficacy of the reactive means in the terms of abatement percentage and variation of the performance during the operation was assessed.

In Figure 22 the trends of the normalized concentrations, the ratio of C to $C_0$, PCE and TCE relative to different experimental times are shown. The Fe/PHB-Column throughout the trial shows a reactivity greater than Fe-Column, by completely removing both the contaminants, although exhibiting a slow and progressive loss of the activity. The EHC-Column, even if firstly shows a reactivity similar to the other two experimental systems, exhibits a fast loss of reactivity over the time, insomuch as after just three working months, the system seems to be unable to remove the tested contaminants, except for a small fraction.

As regards the removal of the nitrate ion from the waters, in figures 23 and 26 can be observed that the increase of the ZVI performance is confirmed, if PHB is present. Throughout the experimental period, although evidencing a slow and progressive reduction of the removal rate, the latter maintains always quite high, assuring the elimination of the nitrate ion after about 20 cm of reactive means under the worst recorded condition. On the other hand, the Fe-Column shows a first decline of the performance, and then an increase of the reactivity when increasing the operational time.

As regards the EHC-Column a first high reactivity, which then rapidly decreases, until to obtain a quite poor removal, not greater than 40% of the initial concentration, as shown in Figure 24, is observed. It is further noted that both the columns containing iron are able to removing the nitrate throughout the experimental period being analyzed, although the Fe-Column shows a slight inflection of the removal during the feeding step with pipeline network water. This event, together with the previous, would lead to assume the concomitant activity of denitrifying microorganisms inside the system. Indeed, the first decrease of reactivity, a phenomenon typically observed for ZVI, is followed by a significant increase that could be related to the synergic effect of biological phenomena of removal. It can be assumed that microorganisms liable for denitrification, as it can be expected, needed of an induction period required for adapting to the experimental conditions and developing the complete metabolic activity. Once that stable biological processes are established, they produce a synergic action, along with ZVI, for the removal of the nitrate ion. The decrease of the

performance of the Fe-Column observed during the operation period with pipeline network water further underlies the importance of the carbon source, namely PHB, which is absent in this experimental system. In fact the new feeding regimen of the system, probably characterized by a lower concentration of denitrifying microorganisms and mainly by a lower occurrence of substrates, causes a marked reduction of the removal of the nitrate ion. Such effect is not observed in the Fe/PHB Column probably due to the presence of the polymer which conversely ensures the continuous occurrence of organic substrate required for the microbial metabolism.

Thus, PHB besides to perform an enhancing action on the ZVI performances, in terms of both reactivity and longevity of the reactive means, enables a faster establishing of the biological degrading activity and prevents the biomass from composition variations of the water to be treated. The nitrite ion was never detected, confirming that the removal of nitrate ion could be attributed to a synergic action between the abiotic and biotic activity, supported by the presence of PHB.

During the trial, the concentration of sulfate ion both through inflow and outflow samplings, and through concentration profiles along the columns was also monitored, in order to better determine the reactivity extent towards such compound.

The data shown in Figure 26 are related to the different concentration profiles realized during the first experimental step. It is noted that the Fe-Column shows no relevant removal of sulfate ion, indicating that the zero-valent iron under the adopted experimental conditions is unable to reducing the sulfate. Therefore, it can be stated that there is no abiotic reduction of the iron. The data concerning the Fe/PHB-Column show, on the other hand, a marked rising trend of the sulfate removal when increasing the operation time of the experimental apparatus. This can be explained by supposing that the observed removal is mainly due to the biological activity, rather than the abiotic one, in particular by sulfate-reducing bacteria (SRB). Thus, the increase of the performance over the time is exclusively due, such as in the case of denitrification, to the biological induction period for establishing the conditions suitable for the biological activity and eventually for the development of a biomass stably adhered to the filler of the column. It seems thus clear that the presence of PHB, and degradation products thereof, as carbon source is able to generally promote and support the biological activity. Furthermore, the buffering action of the fatty acids produced by PHB is likely to develop a more suitable environment for the development of sulfate-reducing bacteria.

As regards the EHC-Column, the data show, after an initial induction step, a fast and complete removal of the sulfate ion (profile after 36 days). Next, the performances of the system rapidly worsen, insomuch as the removal results almost totally absent after just 78 days. Probably the carbon fraction by fermenting very quickly, faster than PHB, has rapidly established the optimum conditions for the SRB growth. However, such organic fraction is rapidly depleted in a similar manner, whereby also the biological activity fails.

As set forth in Figure 27, in the next step, namely the feed with pipeline network water, the removal of sulfate ion significantly decreases in the Fe/PHB-Column. A lower bacterial load, in particular of sulfate-reducers, likely caused a reduction of the active biomass inside the column, and consequently a lower removal of sulfate. Conversely, the other two columns corroborate that observed in the first step. In the third step, after the replacement of the feed with underground water, a fast increase of the performance until the complete removal is observed for the Fe/PHB-Column.

## Example 3

### Materials and methods

The study of the contaminant mobility was performed through an experimental apparatus able to simulate a typical secondary source as separated phase, found in real scenarios of DNAPL contamination of the aquifers.

The experimental apparatus is provided with two sampling points located at the bottom and upper side of the column (a port referred to as IN and a port referred to as OUT) and four side ports. The filler consists of a known amount of sand (3.017 Kg), carefully packed in order to avoid the formation of preferential paths during the subsequent flowing of the feed fluid. The column was fed, through a peristaltic pump, with distilled water spilled within an auto-collapsing bag Tedlar® (SKC, Dorset, UK). The feed rate was set at 0.5 mL/min.

Following to the characterization through tracer test, 40 mL of a 50% V/V mixture of 1,2-Dichloroethane and 1,1,2,2-Tetrachloroethane, selected as target compounds for the trial, were injected within the porous means. Such compounds are representative of various scenarios of real contamination and well represent the class of chlorinated solvents.

The residual source of contamination was obtained by the injection (spike) through the side ports of a 50% V/V mixture of the two contaminants inside the bed of sand.

The system, during a first step, was exclusively fed with an aqueous phase such that to simulate the natural flow of an underground water. Successively, after repeating the spike of contaminant, the column was fed with the effluent of an experimental system, laboratory column, placed upstream of the present apparatus and containing PHB. The effluent was characterized by the presence of volatile fatty acids (VFA), deriving from the fermentation of PHB

contained in the upstream system. The two systems together aimed to simulate the possible use of PHB as a means able to affect the contamination source, even from the point of view of the mobility of the components of the residual phase.

In order to better understand the experimental results, the results deriving from the fluid-dynamic characterization of the system performed through test with conservative tracer will be discussed hereinbelow. The tracer test was carried out prior to the injection of the mixture simulating the residual phase of DNAPL, by using sodium chloride (NaCl), with a step-wise signaling.

In Figure 15 the trend of the chloride ion concentration, outflowing from the column, as a function of the time (breaktrough curve) is shown.

In Figure 16 the experimental curve of the residence time F(t) distribution, obtained disclosing the tracer concentration, normalized to the inflow concentration ($C/C_0$) as a function of the time, and the theoretical curves relative to a ideal Perfect continuous-flow stirring (CSTR) and plug flow PFR behavior are shown.

The experimental data show that the fluid-dynamic behavior of the system can be clearly consider similar to the plug flow model with dispersion.

The hydraulic residence time (T) was calculated both as area comprised between the horizontal line plotted in correspondence of F(t)=1 and the F curve itself (Figure 13) and as inflection point of the sigmoid obtained by non-linear regression of the experimental data (Figure 14).

The effective residence time thus calculated is equal, respectively, to 16.85 h and 16.71 h.

By assuming an average value of T of 16.78 h and knowing the real flow rate Q of the tracer feed (0.63 mL/min), the volume of the pores ($V_0$) was calculated through the equation:

$$V_0 = t_0 * Q$$

The calculated value ($V_0$) is equal to 634 mL.

Since the geometrical volume of the column ($V_c$) is known, 1775 mL, the porosity ($\varepsilon$) could be calculated:

$$\varepsilon = \frac{V_o}{V_c}$$

the obtained value was 0.36.

Finally, by knowing the length (L) of the column, equal to 36.5 cm, and the average residence time ($t_0$) at the flow rate of 0.63 mL/min, the average rate through the pores u was calculated:

$$u = \frac{L}{t_0}$$

resulting equal to 0.036 cm/min.

The values of water solubility of Dichloroethane and Tetrachloroethane and the mixture of the two compounds 50% V/V were experimentally determined through batch tests at room temperature. In particular, in a vial fully filled with distilled water, a volume of pure compound (alone or mixed) in an amount sufficient for obtaining a well detectable precipitate and thus a saturated solution was injected. In order to quantify the solubilized fraction of the compound, the saturated solution was analyzed through gas chromatography of the headspace.

In Figure 15 and Table 8 the solubility values experimentally obtained in different tests compared with those described in literature are graphically and numerically shown.

Table 8

| | **1,2-DCA** | **1,1,2,2-TeCA** |
|---|---|---|
| **Experimental solubility ($gL^{-1}$)** | 9.05 ± 0.28 | 2.99 ± 0.18 |
| **Solubility in literature* ($gL^{-1}$)** | 8.52 | 2.97 |
| **Mixture 50% V/V** | 5.5 ± 0.19 | 1.47 ± 0.09 |
| *CRC 2001 | | |

As regards the individual compounds, the experimentally obtained data of solubility are coherent with that found

in literature. Furthermore, as it is known, the solubility decreases when increasing the number of chlorine atoms; in fact, Tetrachloroethane has a water solubility lower than Dichloroethane.

As regards the mixture of the compounds, a different behavior is observed, in particular the solubility of both the compounds results significantly decreased. This effect is usually represented in the scientific literature through an equation wherein the water solubility of a component existing in the mixture relative to that of the pure component is given by the product of the solubility of the pure component multiplied by the molar fraction of the component in the mixture.

However, it is interesting to consider the consequences that this may have in view of an activity aimed to the treatment of the contamination source. The reduction of the solubility leads to longer periods for depleting the residual fraction, an element that has to be necessarily considered during the designing.

The performed test has the aim to verify the mobility of two standard chlorinated compounds, DCA and TeCA, found as separated phase in the presence and absence of an upstream system consisting of a mixture of ZVI and PHB.

The experimental system was constantly monitored through daily takings of aliquots of effluent solution (port out) subsequently analyzed for determining its contaminant content. The test totally lasted 95 days.

In Figures 16 and 17 the trends of the DCA and TeCA concentration as a function of the operation time of the apparatus starting from the injection of the mixture of the two compounds are disclosed.

The data show a clearly decreasing trend over the time of the concentration of both the chlorinated compounds, significantly faster for DCA and slower for TeCA. The greater solubility of Dichloroethane effects both its maximum concentration reached during the test, greater than TeCA, and the depletion time of the separated phase. At equal flows of underground water, a greater amount, in terms of mass, of DCA is solubilized, well set forth in Figure 16 by the achievement of a constant minimum value just after 15 working days. The particularly low concentration value being obtained could be imputable to the almost complete depletion of the source, namely to the presence of a residual fraction of contaminant that can be hardly, or not reached by the water flow. On the contrary, significant concentration values of TeCA are observed (Figure 17) in the effluent over a period longer than 40 days; next, particularly low concentrations are observed even in this case.

In both the cases, DCA and TeCA, the maximum concentration obtained results markedly lower than the maximum solubility of the two compounds previously determined, probably due to the slow dissolution kinetics which generally characterize the chlorinated solvents.

The aquifer rate results thus one of the controlling factors for the transfer between the two phases. Although it was not an object of specific tests, can be reasonably assumed that to lower aquifer rates can correspond greater concentrations. This fact not necessarily could lead to a reduction of the residence time of the source, since has to be evaluated the product of the concentration by the flow rate in addition to the solubilized amount in order to quantify the removed mass.

The second step of the trial thus contemplated the connection upstream of the column, utilized for simulating the source, of an apparatus containing the mixture of zero-valent iron and PHB. The test aimed to verify the eventual effects deriving from the presence of such composite means on the source mobilization. Even if the contaminant injected during the first test was not completely depleted, a second injection containing the same amounts of mixture used during the previous step was performed.

In Figure 18 and 19 the trends of the 1,2-DCA and 1,1,2,2-TeCA concentrations, compared with the trends of the previous step are shown.

It is noted that for DCA the minimum of the concentration is reached within a time clearly greater than the previous step, about 30 days, as well as the maximum concentration being reached is greater.

As regards TeCA significantly greater concentrations throughout the considered experimental period are observed; furthermore a clear decreasing trend of the concentration is not observed, in contrast with those shown in the previous step, this fact would lead to assume, on one hand, the presence of a quantitatively important residual phase, on the other hand that the presence of the composite means ZVI-PHB located upstream would positively affect the solubilization of the compound.

In order to better assess the differences between the two tests, in terms of solubilized mass of contaminant, for each compound the mass which gradually was removed by the flow of the water from the experimental apparatus was calculated, from this, the overall value of solubilized mass of contaminant was finally estimated. Starting from the knowledge of the feed flow rate and the individual concentrations determined for the different samplings, the daily amount of compound flowing out from the experimental system, and from this, the total amount were thus assessed.

The data reported in Figure 20 and 21 show the trend of the total mass of the compound, expressed in g, which crossed the system, referred to each day of sampling; every point is calculated as the sum of the previous points and indicates the estimation of the solubilized mass until the working day to which is referred to.

The experimental trends indicate a difference between DCA and TeCA. DCA is rapidly solubilized and then reaches more rapidly an equilibrium indicating that the compound, from that time, is no more significantly solubilized.

Conversely, TeCA shows a significantly slower, but sustained increase of its solubilization which, in the absence of the upstream system releasing VFA, tends to decrease, while in the second occurrence, it maintains still rising during

the time of the experiment. The behavior observed for DCA could be interpreted according to two different mechanisms: on one hand, the mass of separated phase introduced into the system could be actually depleted, on the other hand a residual mass which is hardly reached by the water flow or is less soluble due to the interactions with the filler being used could still exist. The second hypothesis seems to be more supported by comparing the mass value estimated at the end of the second step with the theoretical one added as separated phase. In the second step of the trial a greater release of contaminant, connected to a faster solubilization rate is observed. In this case the trend also reaches an equilibrium, significantly greater than that from the first step, equal to a value of about 37 g of solubilized 1,2-DCA. From a first analysis, such a value would seem to be incorrect, considering that in the second test, 24 g of DCA were used, thus resulting in sampling or analytic errors. However, if the sum of the total mass solubilized during the two experimental steps is taken into account, a value very close to that derived from the sum of the DCA mass used for the two subsequent injections is obtained. Such a result would seem to indicate that in the second step, the residual fraction, unavailable in the first step, has been solubilized concomitantly to the mass subsequently injected.

These observations demonstrate that the presence of the composite means upstream of the source promotes, in both qualitative and quantitative terms, the solubilization of the separated phase, making the compound more available for a further treatment downstream of the generated plume. A direct consequence is the reduction of the time required for the treatment of the source and thus for the clean-up of a hypothetical site. Similar considerations can be made as regards TeCA, for which, however, some differences have to be underlined. The most obvious one is that, over the analyzed experimental period, the trend of the solubilized TeCA mass does not reach the equilibrium, certainly caused by the less solubility and a lower solubilization kinetics of this compound relative to DCA. Moreover, it is clear that the presence of the barrier upstream of the source even in this case remarkably accelerates the solubilization of the compound than the experimental step in which it was absent, although again the complete removal of the source as separated phase is not obtained.

## Claims

**1.** Process for the clean-up of underground waters contaminated by chlorinated solvents, nitrates and sulfates comprising the following steps:

a) extracting the contaminated underground water from the site of contamination
b) contacting the water obtained in step a) with Polyhydroxybutyrate (PHB)
c) returning the water obtained in step b) to the site of contamination

**characterized in that** steps from a) to c) are carried out in a continuous and cyclic manner until the end of the cleaning-up process,
wherein alternatively to step b) in step b') the water obtained in step a) is simultaneously contacted with Polyhydroxybutyrate (PHB) and a zero-valent iron source.

**2.** Process according to claim 1 wherein prior to step b) or b') the water obtained from step a) in step e) is contacted with sand.

**3.** Process according to any one of claims 1 and 2 wherein after step b) and prior to step c) the water obtained in step b) in step d) is contacted with zero-valent iron.

## Patentansprüche

**1.** Verfahren zur Reinigung von Grundwasser, das durch chlorierte Lösemittel, Nitrate und Sulfate kontaminiert ist, die folgenden Schritte umfassend:

a) Extrahieren des kontaminierten Grundwassers vom Ort der Kontamination
b) in Kontakt Bringen des Wassers, das in Schritt a) erhalten wurde, mit Polyhydroxybutyrat (PHB)
c) Rückführen des Wassers, das in Schritt b) erhalten wurde, an den Ort der Kontamination,

**dadurch gekennzeichnet, dass** die Schritte von a) bis c) auf eine kontinuierliche und zyklische Weise bis zum Ende des Reinigungsprozesses durchgeführt werden,
worin alternativ zu Schritt b) in Schritt b') das in Schritt a) erhaltene Wasser simultan in Kontakt gebracht wird mit Polyhydroxybutyrat (PHB) und einer nullwertigen Eisenquelle.

**2.** Verfahren gemäß Anspruch 1, worin vor Schritt b) oder b') das in Schritt a) erhaltene Wasser in Schritt e) mit Sand in Kontakt gebracht wird.

**3.** Verfahren gemäß irgendeinem der Ansprüche 1 und 2, worin nach Schritt b) und vor Schritt c) das in Schritt b) erhaltene Wasser in Schritt d) in Kontakt mit nullwertigem Eisen gebracht wird.

## Revendications

**1.** Procédé pour le nettoyage d'eaux souterraines contaminées par des solvants chlorés, des nitrates et des sulfates comprenant les étapes suivantes :

a) l'extraction de l'eau souterraine contaminée à partir du site de contamination
b) la mise en contact de l'eau obtenue dans l'étape a) avec un polyhydroxybutyrate (PHB)
c) le renvoi de l'eau obtenue dans l'étape b) dans le site de contamination **caractérisé en ce que** les étapes a) à c) sont réalisées d'une manière continue et cyclique jusqu'à la fin du procédé de nettoyage,

dans lequel en variante à l'étape b) dans une étape b') l'eau obtenue dans l'étape a) est simultanément mise en contact avec un polyhydroxybutyrate (PHB) et une source de fer à valence zéro.

**2.** Procédé selon la revendication 1 dans lequel avant l'étape b) ou b') l'eau obtenue à partir de l'étape a) dans une étape e) est mise en contact avec un sable.

**3.** Procédé selon l'une quelconque des revendications 1 et 2 dans lequel après l'étape b) et avant l'étape c) l'eau obtenue dans l'étape b) dans une étape d) est mise en contact avec du fer à valence zéro.

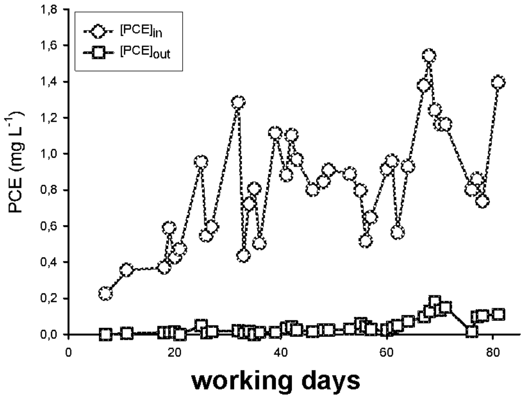


1a

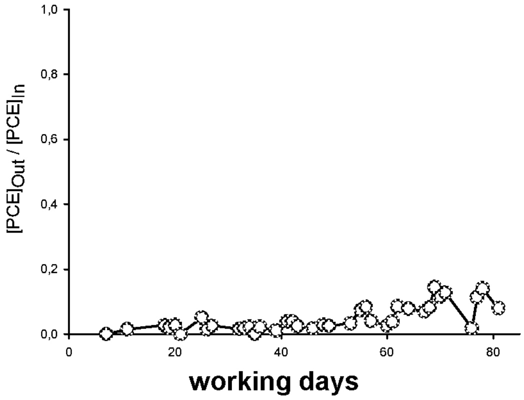


1A

Figure 1

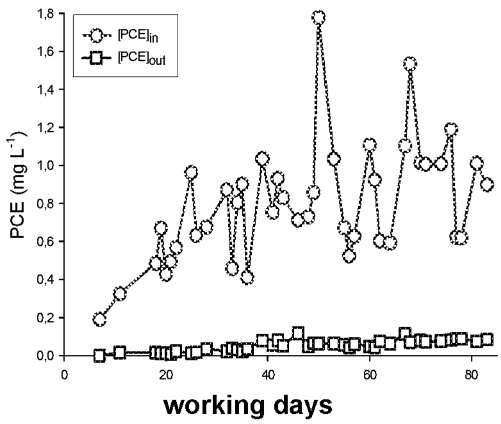


2b

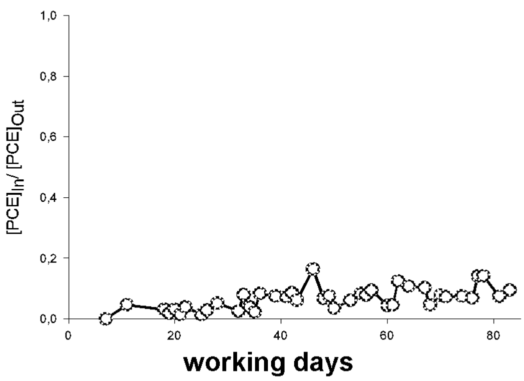


2B

Figure 2

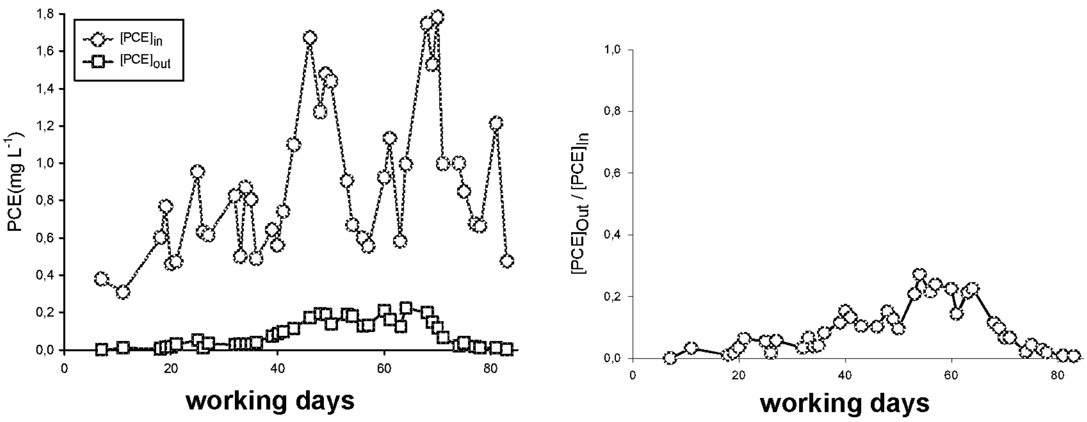


3c

3C

Figure 3

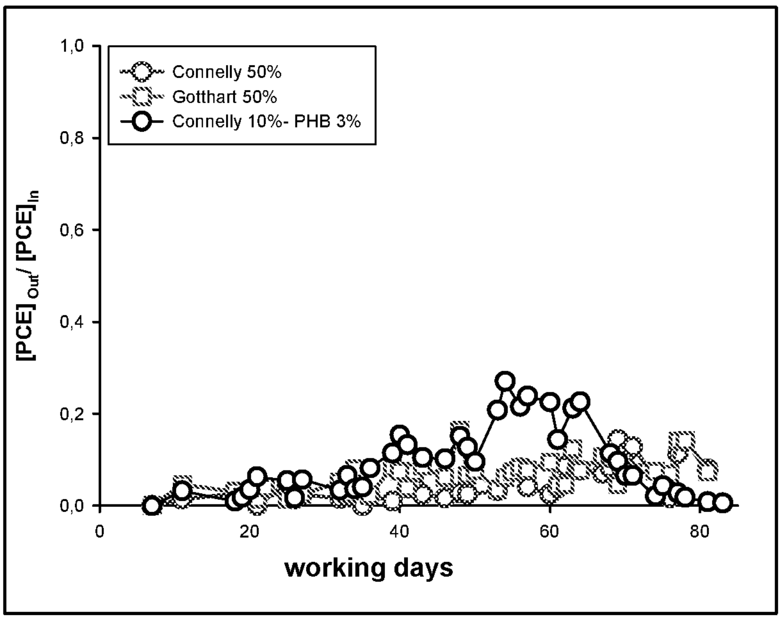


Figure 4

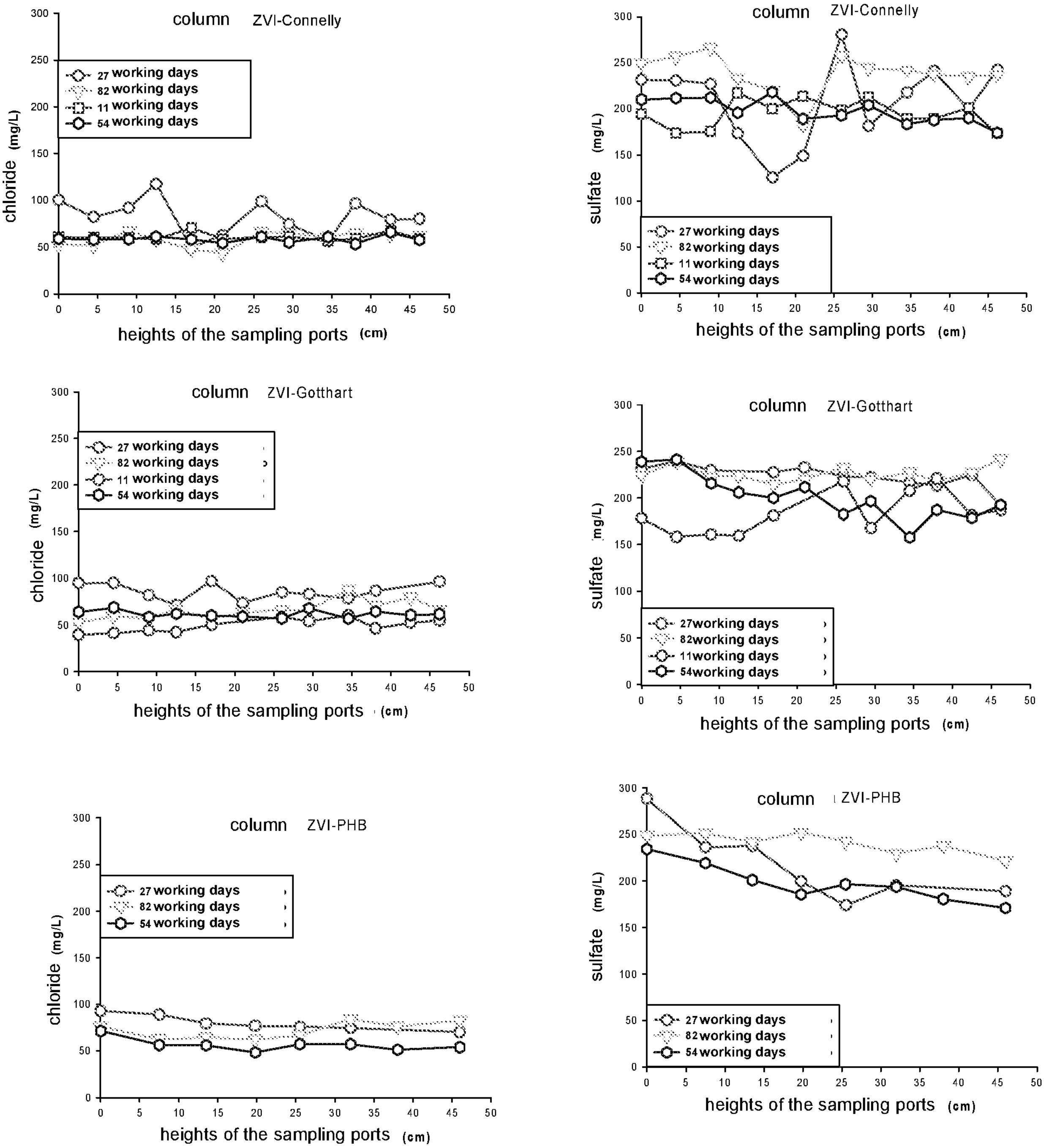
column ZVI-Connelly
chloride (mg/L)
heights of the sampling ports (cm)
27 working days
82 working days
11 working days
54 working days
column ZVI-Connelly
sulfate (mg/L)
heights of the sampling ports (cm)
27 working days
82 working days
11 working days
54 working days
column ZVI-Gotthart
chloride (mg/L)
heights of the sampling ports (cm)
27 working days
82 working days
11 working days
54 working days
column ZVI-Gotthart
sulfate (mg/L)
heights of the sampling ports (cm)
27working days
82working days
11working days
54working days
column ZVI-PHB
chloride (mg/L)
heights of the sampling ports (cm)
27 working days
82 working days
54 working days
column ZVI-PHB
sulfate (mg/L)
heights of the sampling ports (cm)
27 working days
82 working days
54 working days

**Figure 5**

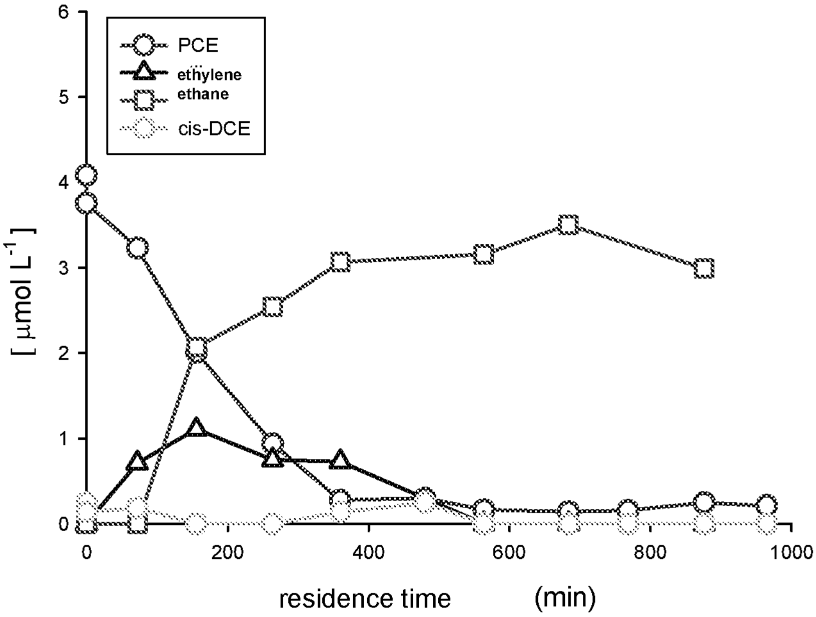
PCE
ethylene
ethane
cis-DCE
[ µmol L-1 ]
0
1
2
3
4
5
6
0
200
400
600
800
1000
residence time (min)

Figure 6

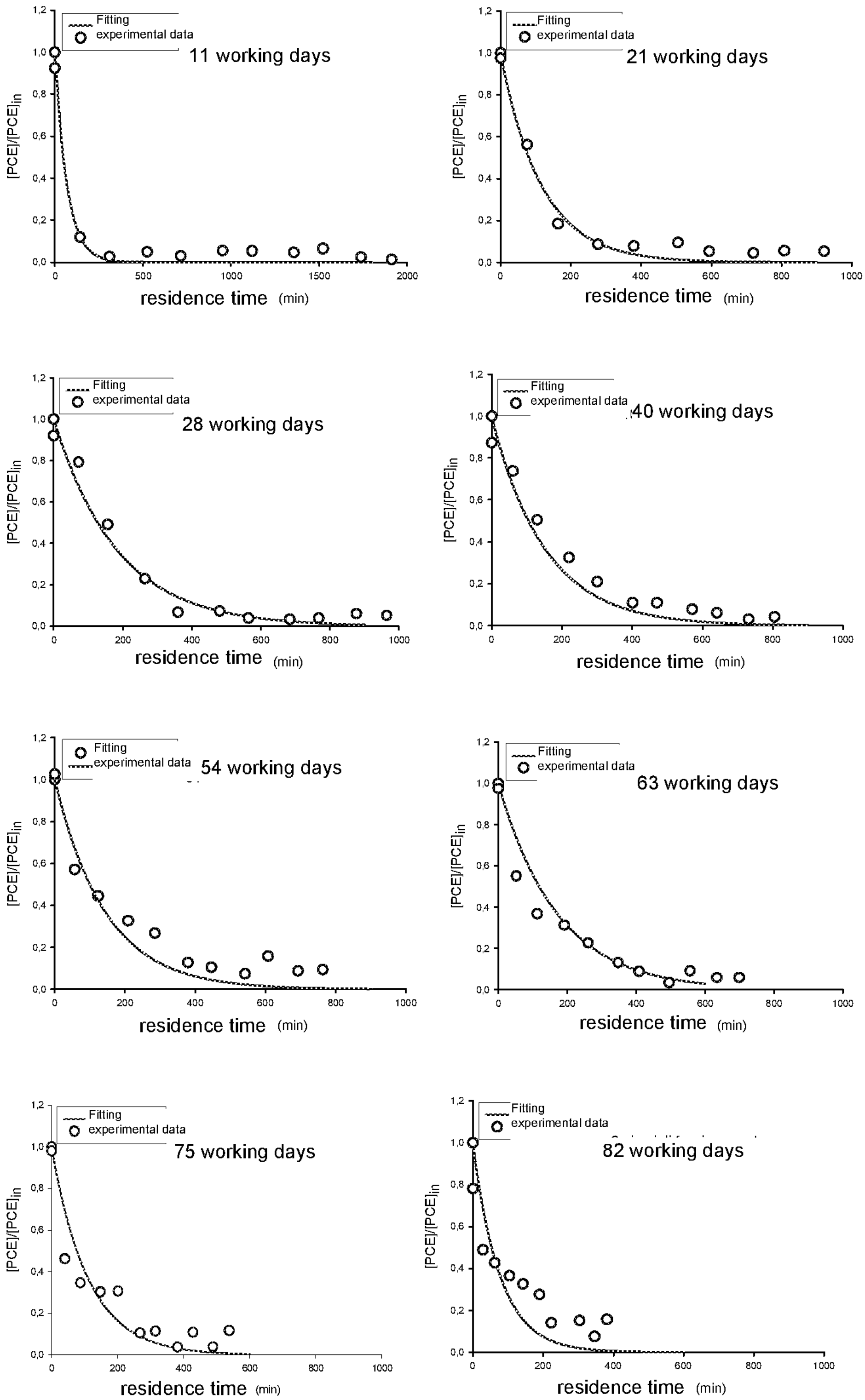
Fitting
experimental data
11 working days
21 working days
28 working days
40 working days
54 working days
63 working days
75 working days
82 working days
[PCE]/[PCE]in
residence time (min)

Figure 7

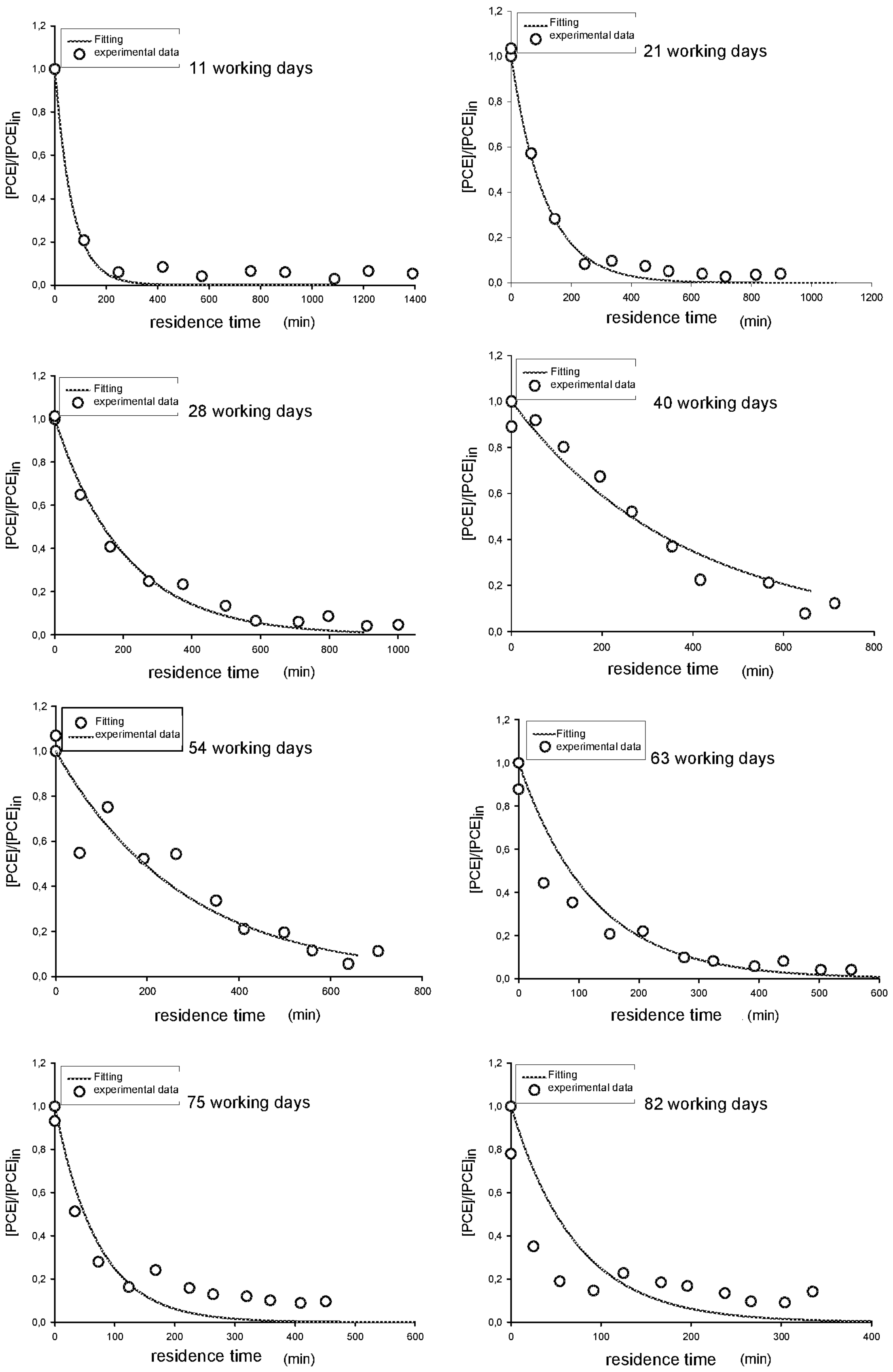
Fitting
experimental data
11 working days
21 working days
28 working days
40 working days
54 working days
63 working days
75 working days
82 working days
[PCE]/[PCE]in
residence time (min)

Figure 8

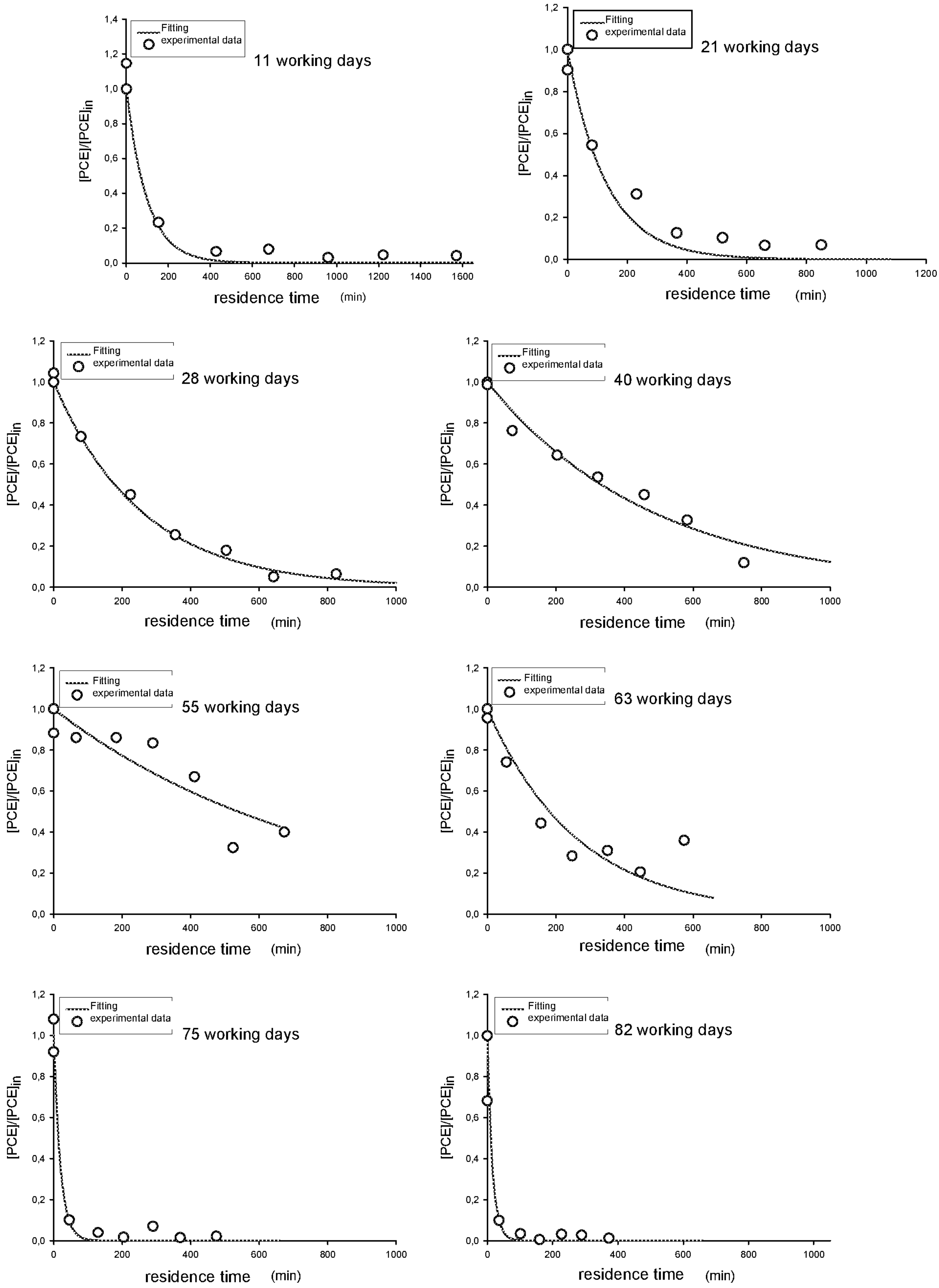
Fitting
experimental data
11 working days
21 working days
28 working days
40 working days
55 working days
63 working days
75 working days
82 working days
[PCE]/[PCE]in
residence time (min)

**Figure 9**

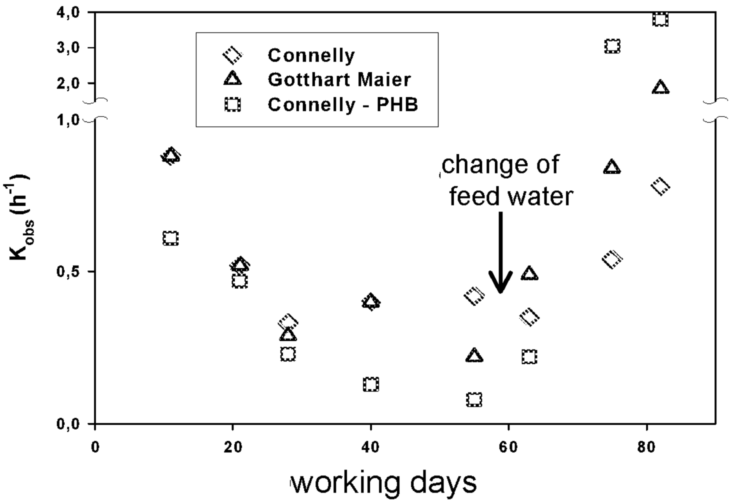


Figure 10

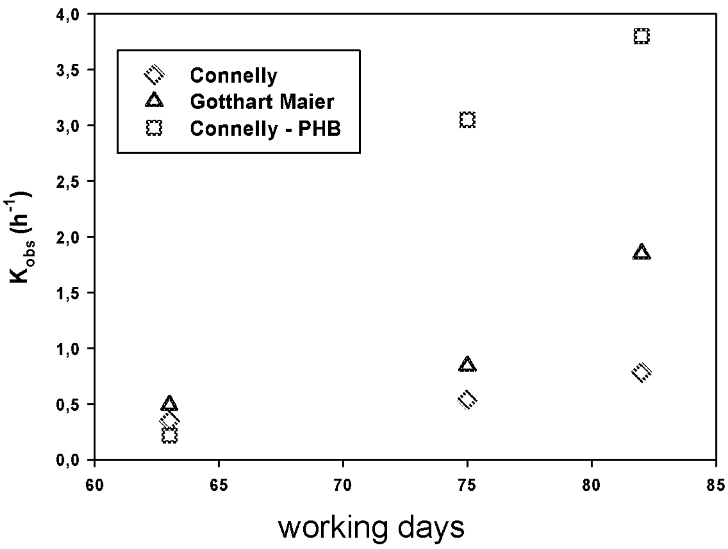


Figure 11

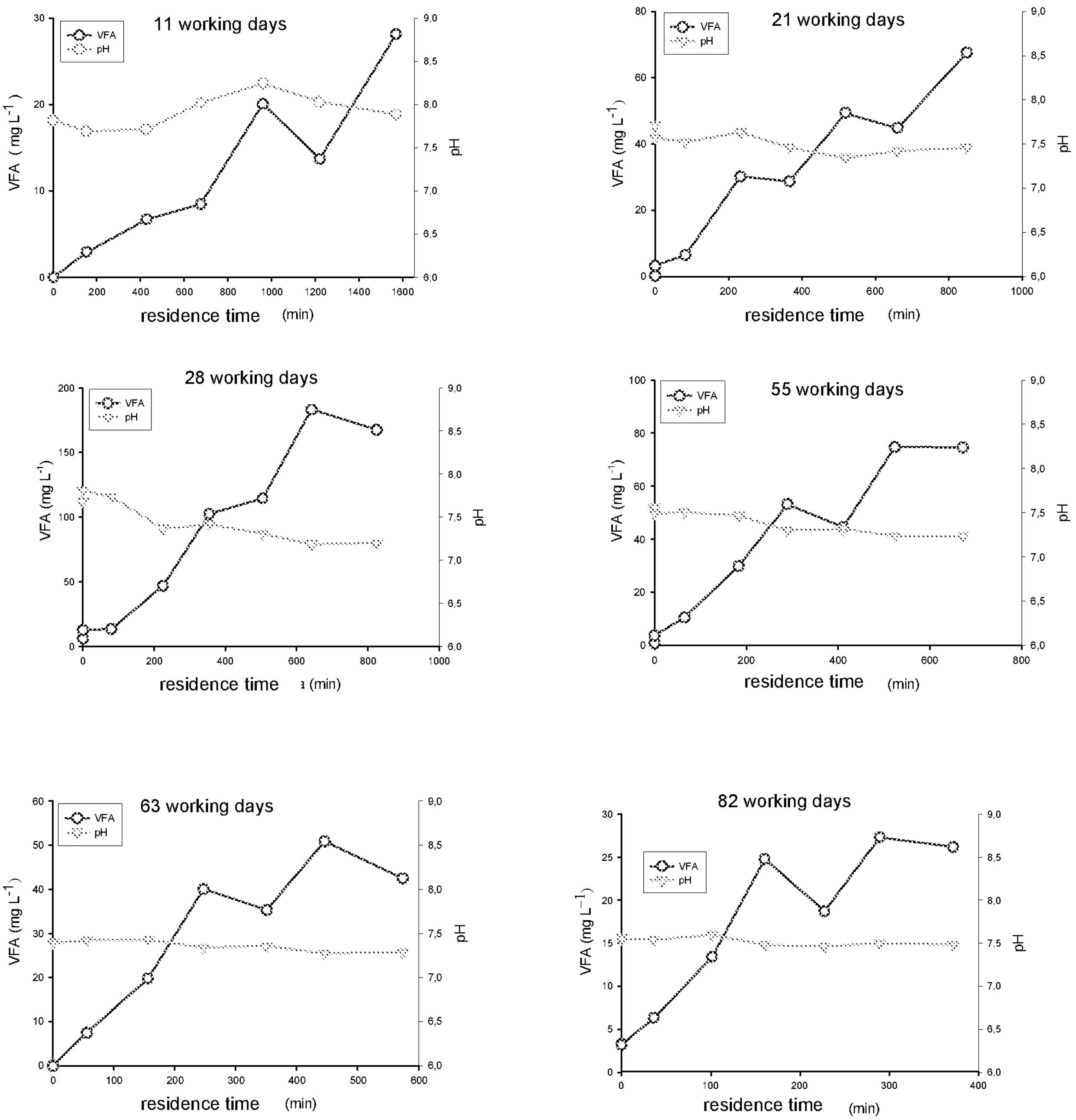
11 working days
21 working days
28 working days
55 working days
63 working days
82 working days
VFA
pH
VFA (mg L-1)
pH
residence time (min)

**Figure 12**

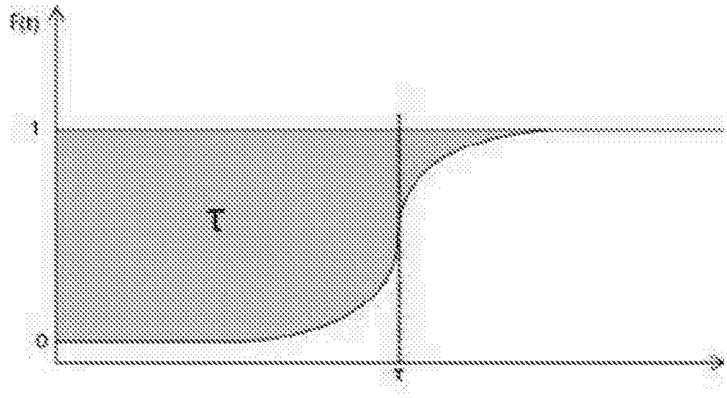


Figure 13

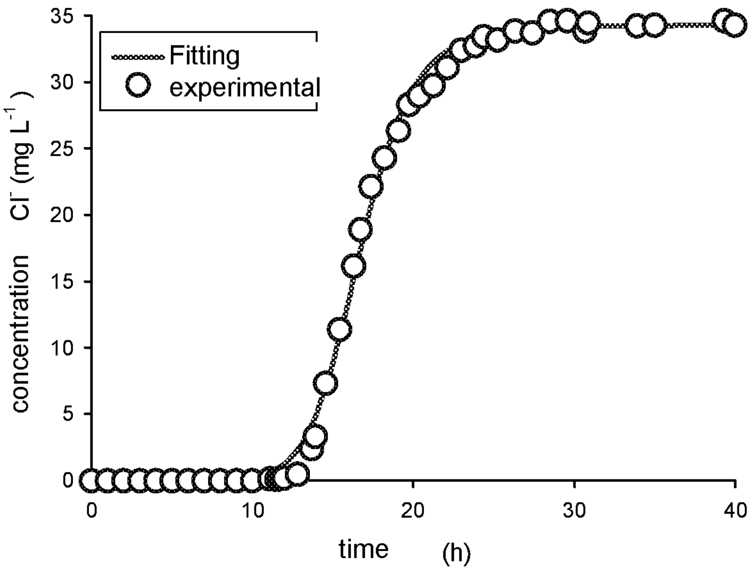


Figure 14

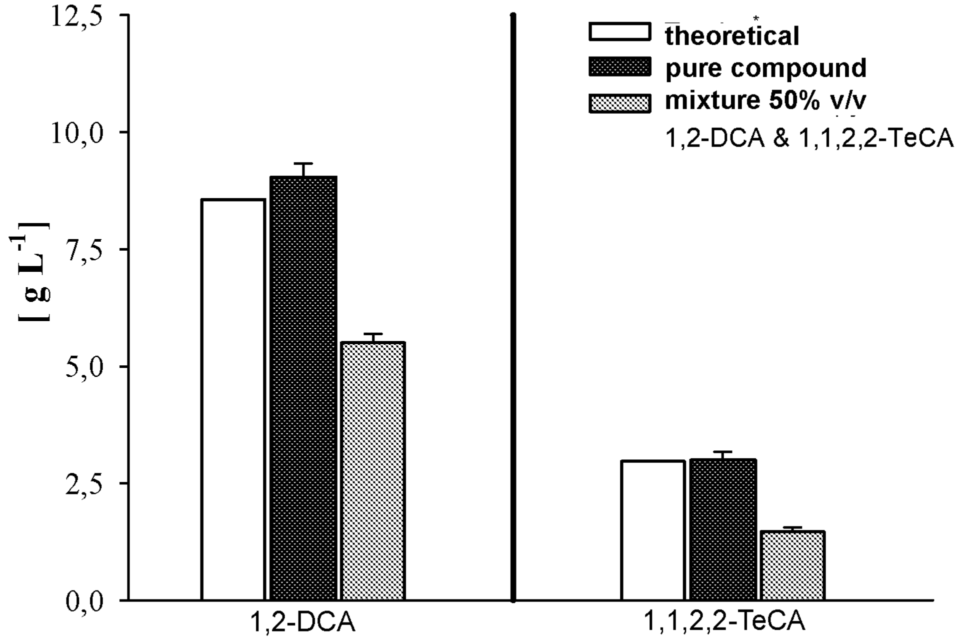


Figure 15

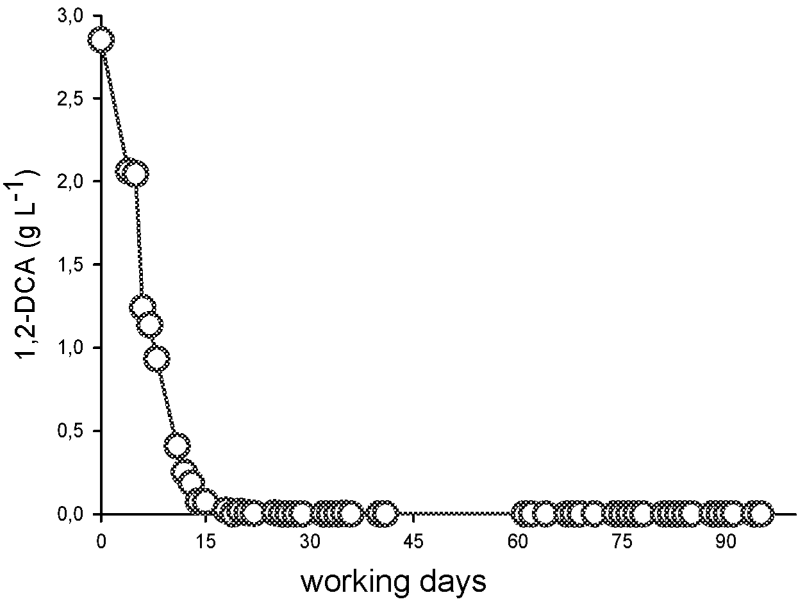


Figure 16

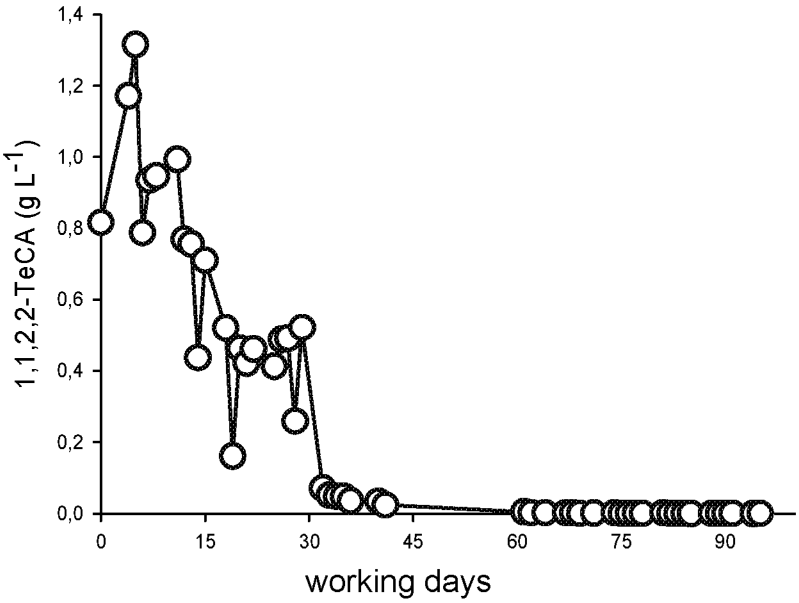


Figure 17

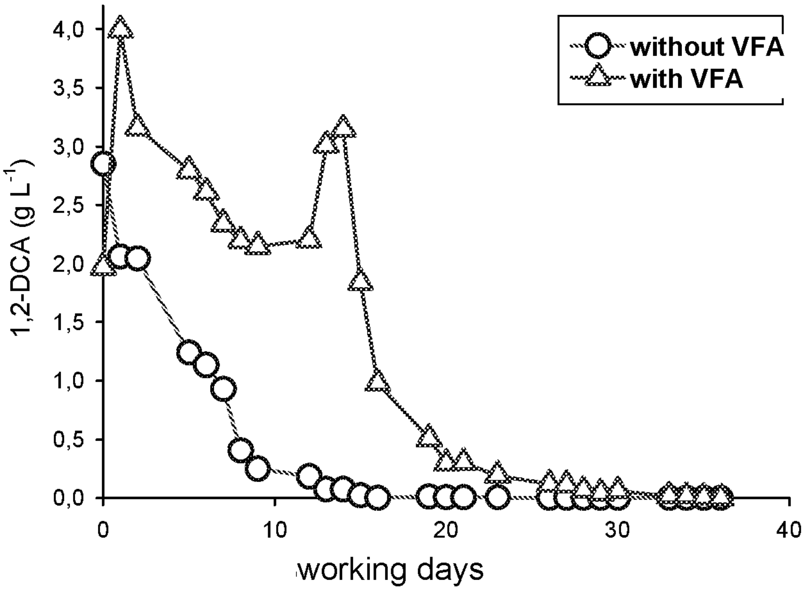


Figure 18

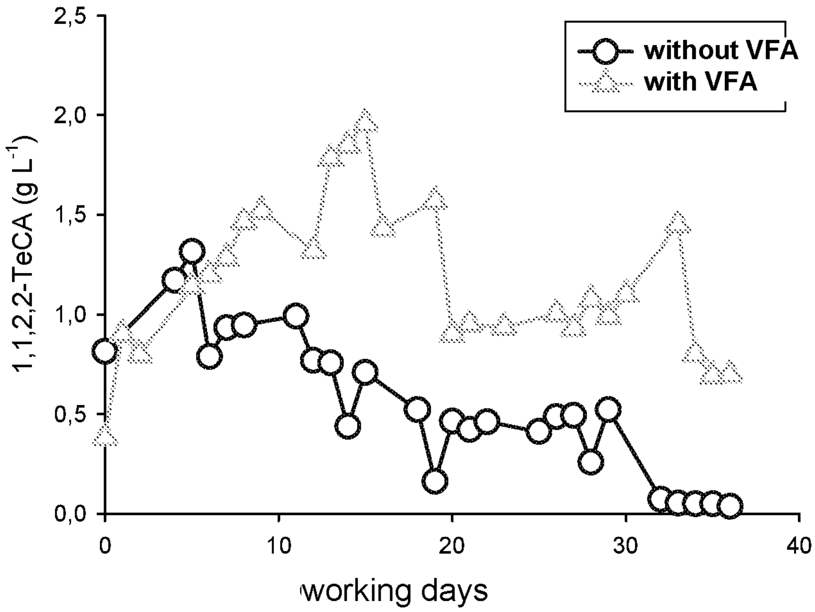


Figure 19

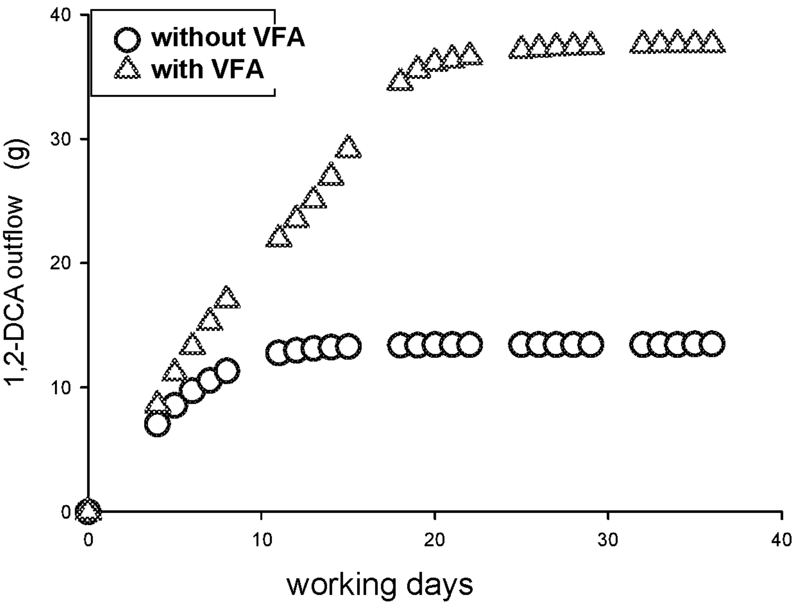


Figure 20

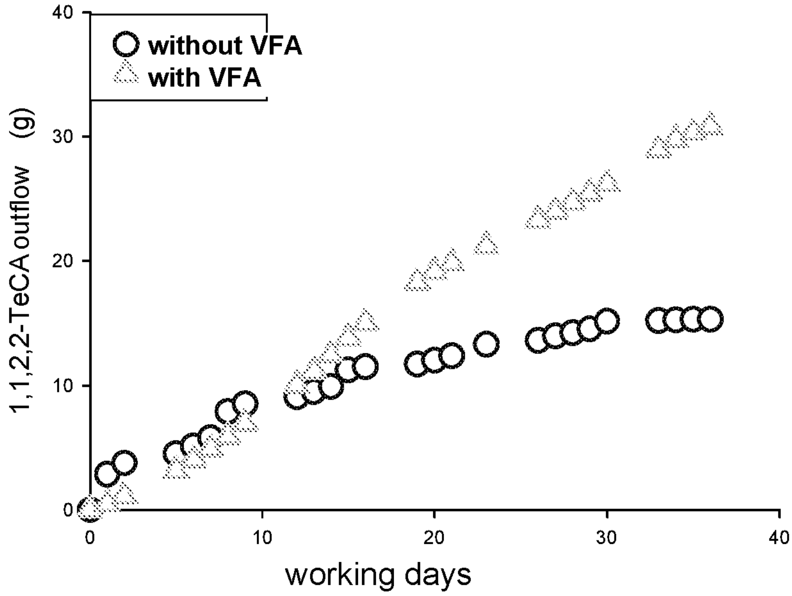
40
30
20
10
0
1,1,2,2-TeCA outflow (g)
without VFA
with VFA
0
10
20
30
40
working days

Figure 21

after 1 month trial

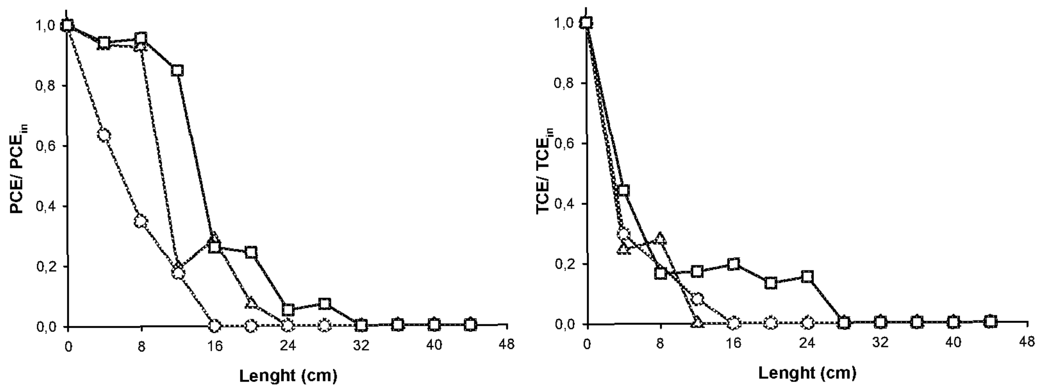


after 3 months trial

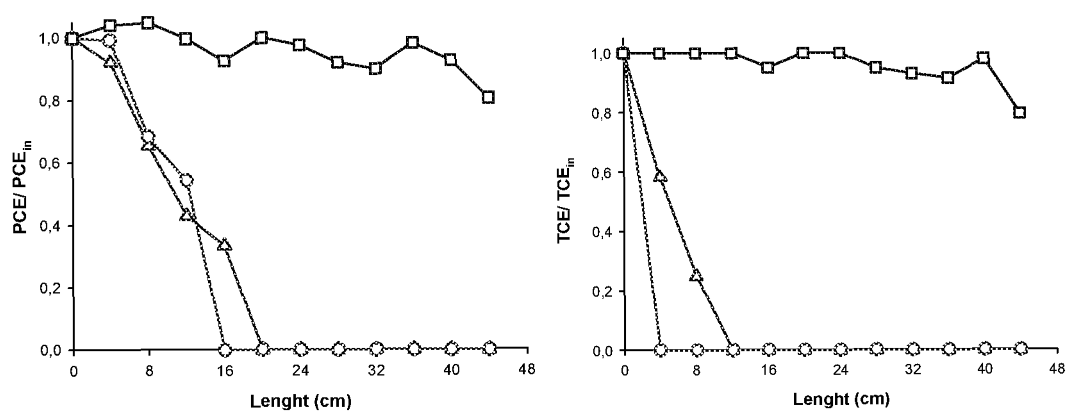


after 1 year trial

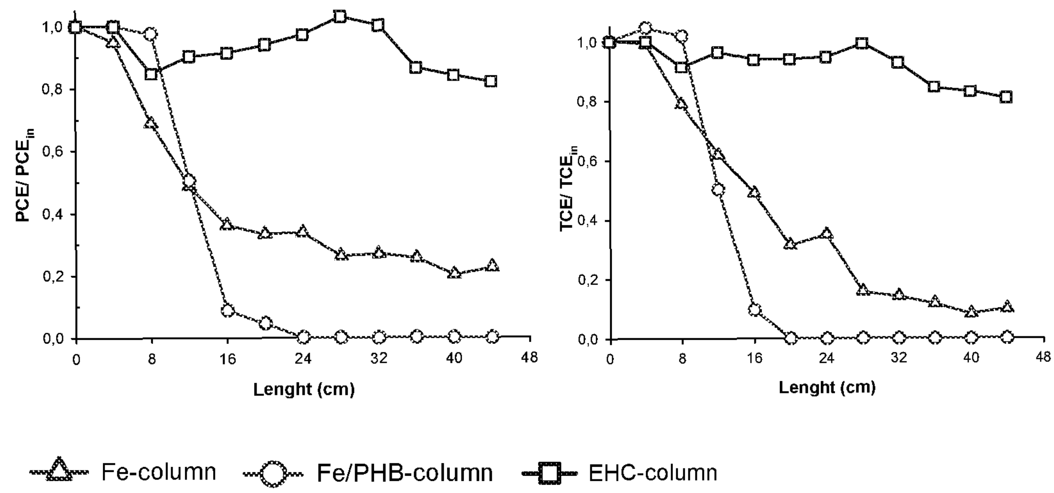


Figure 22

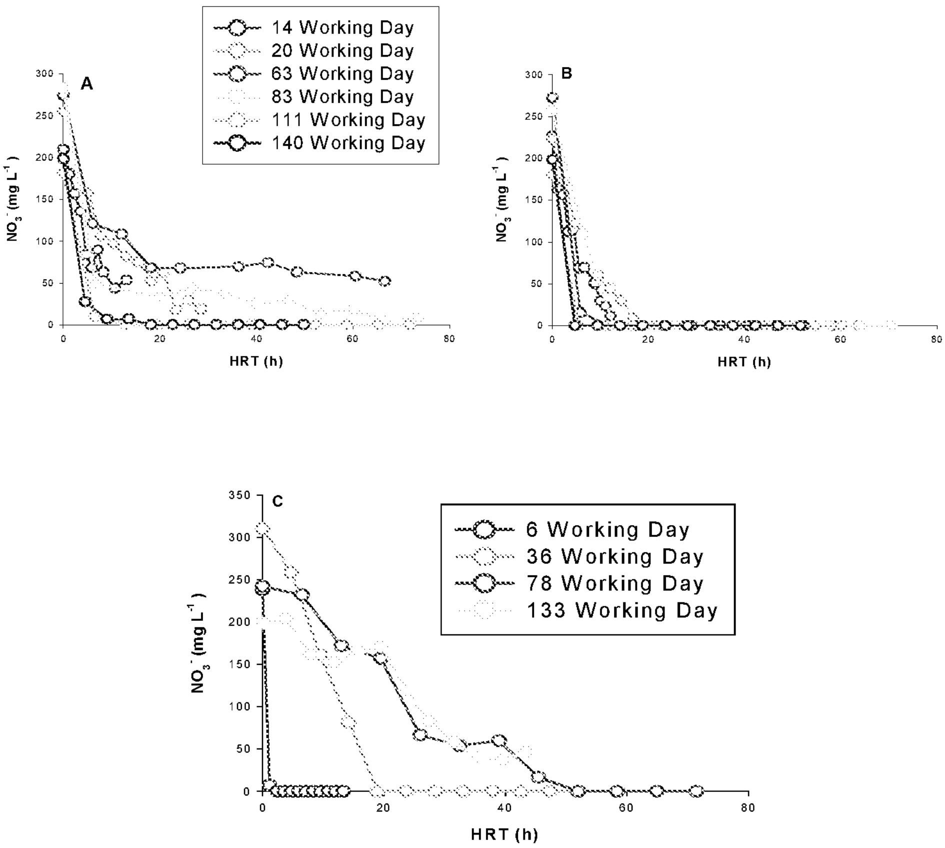


Figure 23

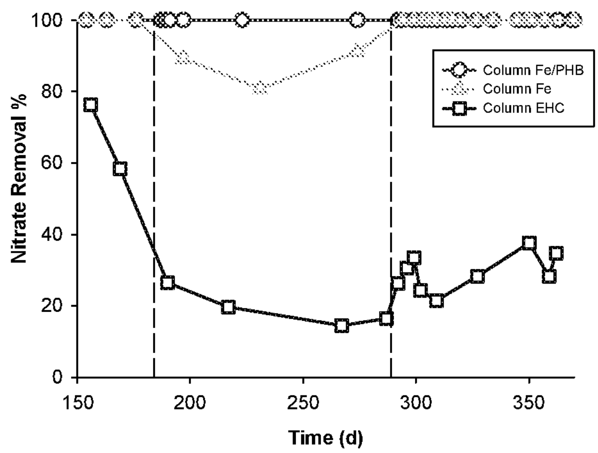


Figure 24

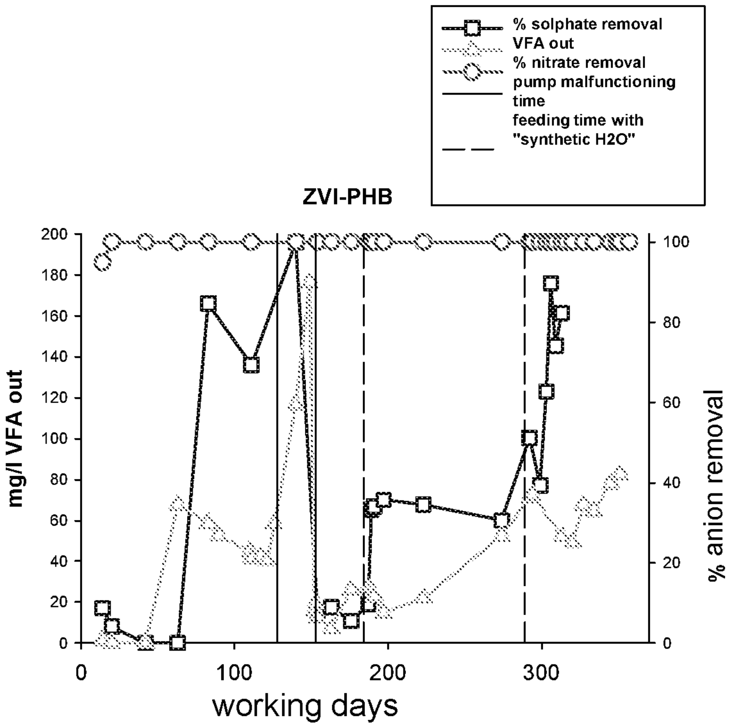


Figure 25

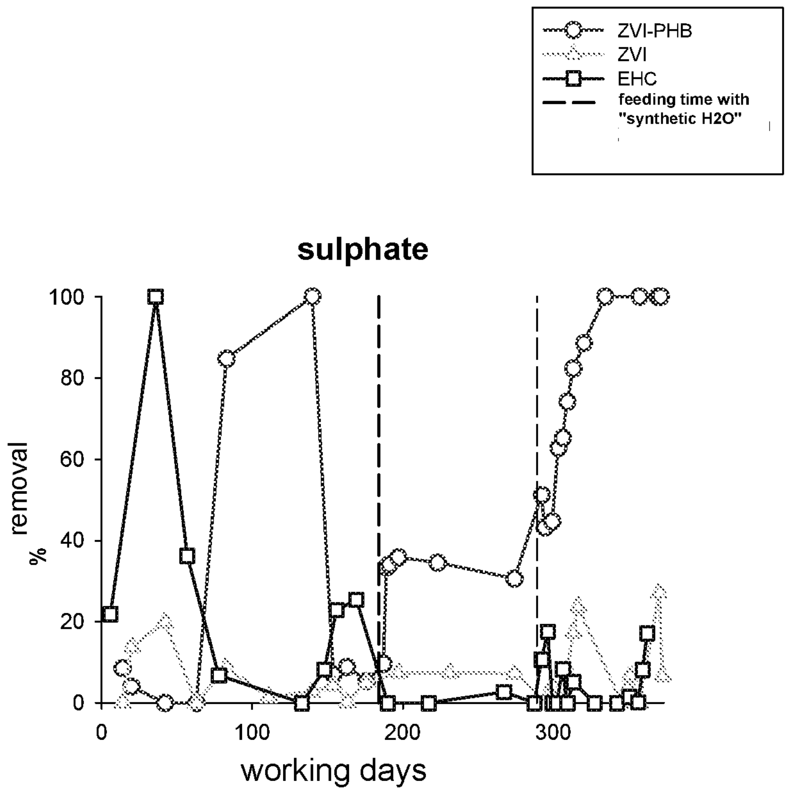


Figure 27

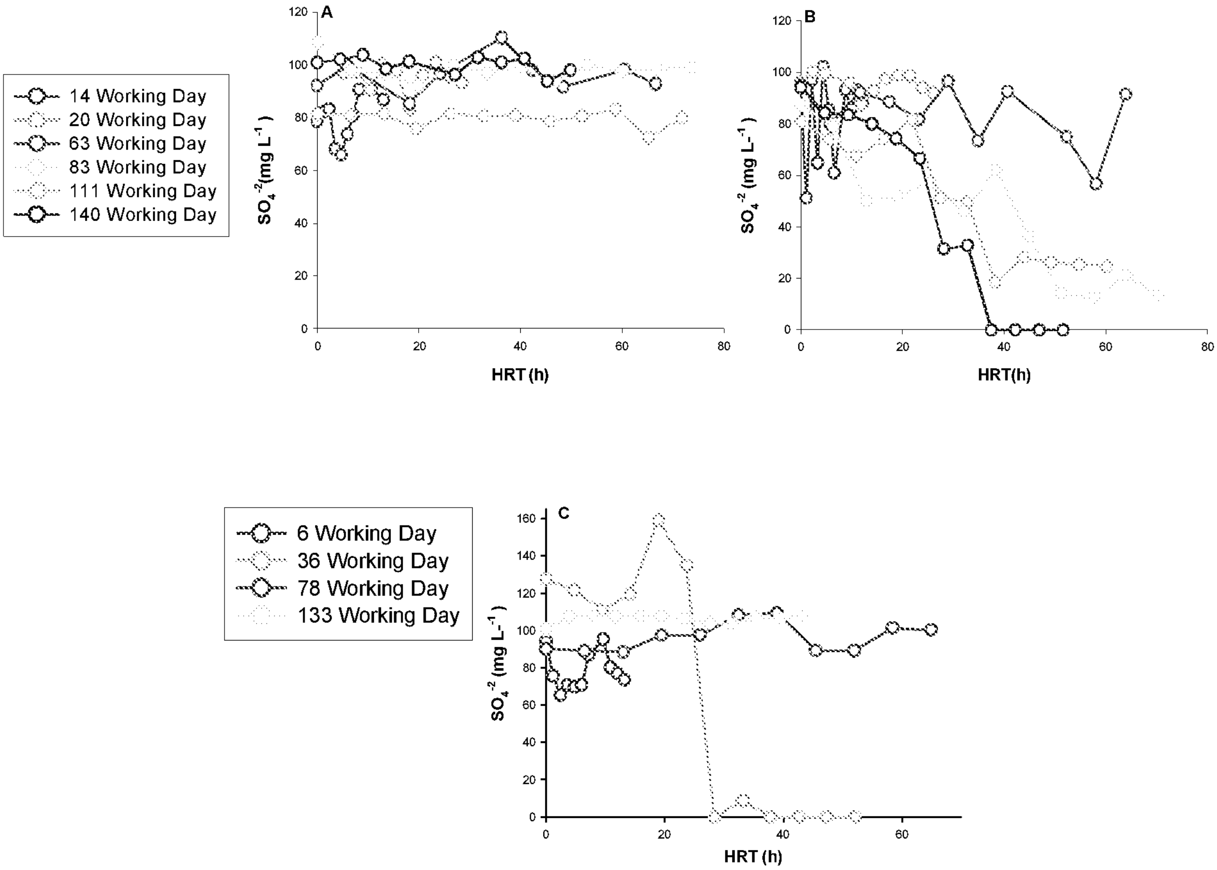
A
B
C
14 Working Day
20 Working Day
63 Working Day
83 Working Day
111 Working Day
140 Working Day
6 Working Day
36 Working Day
78 Working Day
133 Working Day
$SO_4^{-2}$ (mg $L^{-1}$)
HRT (h)
HRT(h)

Figure 26

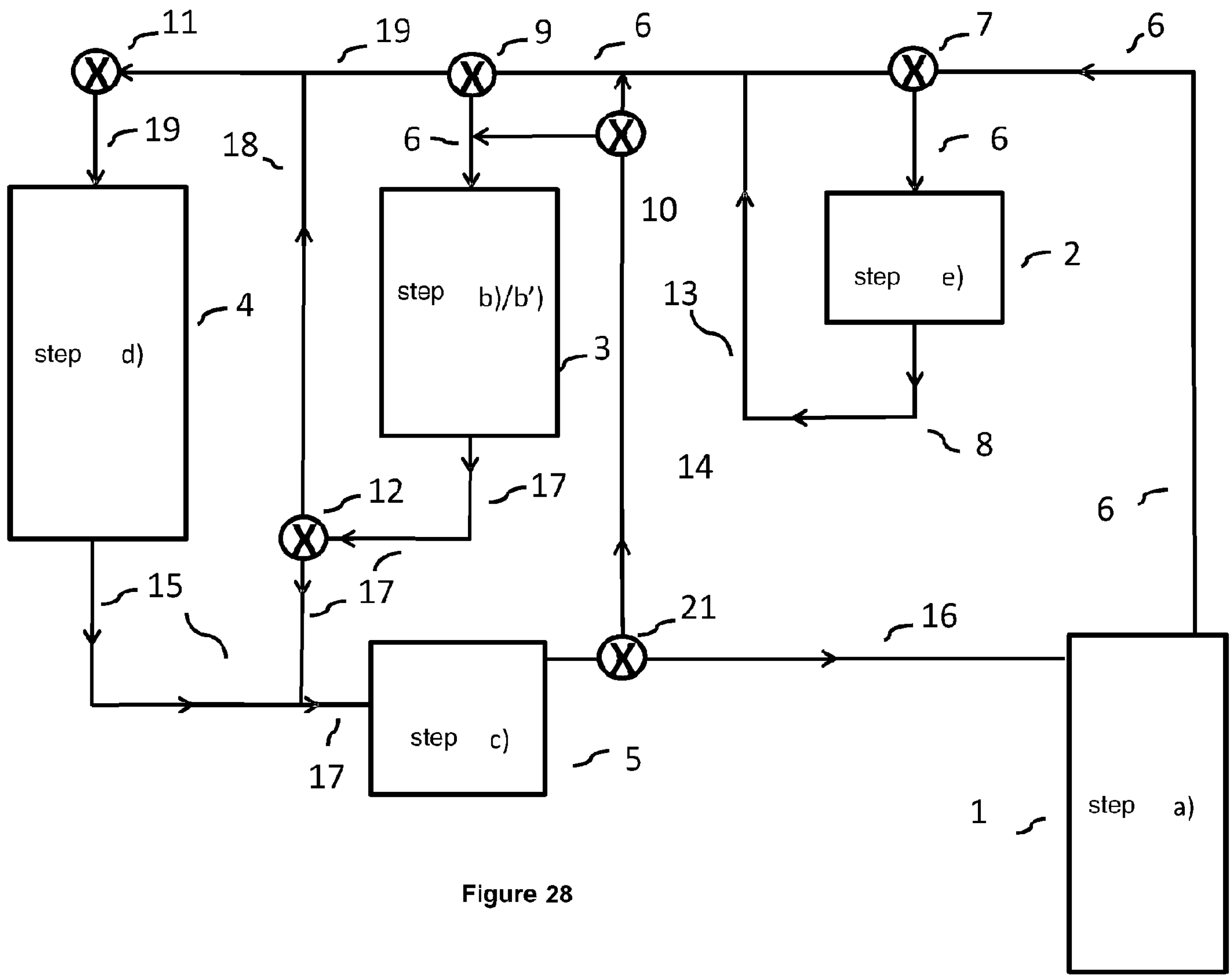
11
19
9
6
7
6
19
18
6
6
10
step d)
4
step b)/b')
3
13
step e)
2
8
14
12
17
6
15
17
21
16
step c)
5
17
1
step a)

Figure 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6679992 B
- CN 103709684
- EP 0572818 A
- EP 0543358 A
- EP 0490182 A
- EP 0486976 A
- EP 0472967 A
- EP 04337805 A
- EP 0431384 A
- EP 0418572 A
- EP 0418570 A
- EP 347576 A
- EP 4950394 A
- EP 0242665 A


### Non-patent literature cited in the description


- **MCCARTY P. L. ; SEMPRINI L.** Ground-water treatment for chlorinated solvents. *Handbook of Bioremediation,* 1994, 87-116
- **ELFANTROUSSI, S. ; H. NAVEAU ; S. N. AGATHOS.** Anaerobic dechlorinating bacteria. *Biotechnology Progress,* 1998, vol. 14 (2), 167-188
- **MCCARTY, P. L.** In situ bioremediation of chlorinated solvents. *Current Opinion in Biotechnology,* 1993, vol. 4 (3), 323-330
- Chlorinated organics. **MCCARTY, P. L.** Environmental Availability in Soils, Chlorinated Organics, Explosives, Metals. Annapolis. American Academy of Environmental Engineers, 1999
- In situ transformation of halogenated aliphatic compounds under anaerobic conditions. **SEMPRINI, L.** Subsurface Restoration. Ann Arbor Press, 1997, 429-450
- **SEMPRINI, L.** Strategies for aerobic co-metabolism of chlorinated solvents. *Current Opinion in Biotechnology,* 1997, vol. 8 (3), 296-308
- **C.A. SCHANKE ; L.P. WACKETT.** Environmental reductive elimination reactions of polychlorinated ethanes mimicked by transition-metal coenzymes. *Environ Sci Technol,* 1992, vol. 26, 830-833
- **SMATLAK C.R. ; GOSSET J.M. ; ZINDER S.H.** Comparative kinetics of hydrogen utilization for reductive dechlorination of tetrachloroethene and methanogenesis in an anaerobic enrichment culture. *Environ. Sci. Technol.,* 1996, vol. 30, 2850-2858
- **YANG, Y. ; P. L. MCCARTY.** Competition for hydrogen within a chlorinated solvent dehalogenating mixed culture. *Environmental Science and Technology,* 1998, vol. 32 (22), 3591-3597
- **ANDERSON, J. E. ; P. L. MCCARTY.** Transformation yields of chlorinated ethenes by a methanotrophic mixed culture expressing particulate methane monooxygenase. *Applied and Environmental Microbiology,* 1997, vol. 63 (2), 687-693
- **SCHOLZ-MURAMATSU H. ; NEUMANN A. ; MEßMER M. ; MOORE E. ; DIEKERT, G.** Isolation and characterization of Dehalospirillum multivorans gen. nov., sp. nov., a tetrachloroethene-utilizing, strictly anaerobic bacterium. *Arch. Microbiol.,* 1995, vol. 163, 48-56
- **GERRITSE J. ; RENARD V. ; PEDRO GOMES T. M. ; LAWSON P.A. ; COLLINS M. D. ; GOTTSCHAL J. C.** Desulfitobacterium sp. strain PCE1, an anaerobic bacterium that can grow by reductive dechlorination of tetrachloroethene or ortho-chlorinated phenols. *Arch. Microbiol.,* 1996, vol. 165, 132-140
- **WILD A. ; HERMANN R. ; LEISINGER R.** Isolation of an anaerobic bacterium which reductively dechlorinates tetrachloroethene and trichloroethene. *Biodegradation,* 1996, vol. 7, 507-511
- **MAYMO-GATELL X ; CHIEN Y.T. ; GOSSET J.M. ; ZINDER S.H.** Isolation of a bacterium that reductively dechlorinates tetrachloroethene to ethene. *Science,* 1997, vol. 276, 1568-1571
- **HOLLIGER C. ; HAHN D. ; HARMSEN H. ; LUDWIG W. ; SCHUMACHER W. ; TINDALL B. ; VAZQUEZ F. ; WEISS N. ; ZEHNDER A.J.B.** Dehalobacter restrictus gen. nov. and sp. nov., a strictly anaerobic bacterium that reductively dechlorinates tetra-and trichloroethene in an anaerobic respiration. *Arch.Microbiol.,* 1998, vol. 169, 313-321
- **CHANG Y.C. ; HATSU M. ; JUNG,K. ; YOO, Y.S. ; TAKAMIZAWA, K.** Isolation and characterization of a tetrachloroethylene dechlorinating bacterium, Clostridium bifermentans. *DPH-1. J. Biosci. Bioeng.,* 2000, vol. 89, 489-491

- **DISTEFANO T.D. ; GOSSETT JM ; ZINDER S.H.** Hydrogen as an electron donor for dechlorination of tetrachloroethene by an anaerobic mixed culture. *Appl. Environ. Microbiol.,* 1992, vol. 58, 3622-3629
- **SMATLAK, C. R. ; J. M. GOSSETT ; S. H. ZINDER.** Comparative kinetics of hydrogen utilization for reductive dechlorination of tetrachloroethene and methanogenesis in an anaerobic enrichment culture. *Environmental Science and Technology,* 1996, vol. 30, 2850-2858
- **KOMATSU T. ; MOMONOI K. ; MATSUO T. ; HANAKI K.** Biotransformation of cis-1,2-dichloroethylene to ethylene and ethane under anaerobic conditions. *Water Sci. Technol.,* 1994, vol. 30, 75-84
- **AULENTA F. ; FUOCO M. ; CANOSA A. ; PETRANGELI PAPINI M. ; MAJONE M.** Use of poly-P-hydroxy-butyrate as a slow-release electron donor for the microbial reductive dechlorination of TCE. *Water Science and Technology,* 2008, vol. 57 (6), 921-925
- **G. C.C. YANG ; HSAIO-LAN LEE.** Chemical reduction of nitrate by nanosized iron: kinetics and pathways. *Water. Res.,* 2005, vol. 39, 884-894
- **Y.H. HUANG ; T.C. ZHANG.** *Effect of low pH on nitrate reduction by iron powder Water Res.,* 2004, vol. 38, 2631-2642
- **F. CHENG ; R. MUFTIKIAN ; Q. FERNANDO ; N. KORTE.** Reduction of nitrate to ammonia by zero-valent iron. *Chemosphere,* 1997, vol. 35 (11), 2689-2695
- **FENGLIAN FU ; DIONYSIOS D. DIONYSIOU ; HONG LIU.** The use of zero-valent iron for groundwater remediation and wastewater treatment. *A review, Journal Haz. Mat.,* 07 January 2014
- **YI AN ; TIELONG LI ; ZHAOHUI JIN ; MEIYING DONG ; QIANQIAN LI ; SHUAIMA WANG.** Decreasing ammonium generation using hydrogenotrophic bacteria in the process of nitrate reduction by nanoscale zero-valent iron. *Sci. Tot Env,* 2009, vol. 407 (21), 5465-5470
- **B. GU ; D.B. WATSON ; L. WU ; D.H. PHILLIPS ; D.C. WHITE ; J. ZHOU.** Microbiological characteristics in a zero-valent iron reactive barrier Environ. *Monitoring Assessment,* 2002, vol. 77, 293-309
- **M.A. GOMEZ ; J. GONZALEZ-LOPEZ ; E. HONTORIA-GARCIA.** Influence of carbon source on nitrate removal of contaminated groundwater in denitrifying submerged filter. *J. Haz. Mat.,* 2000, vol. 80, 69-80
- **C. DELLA ROCCA ; VI. BELDAY ; S. MERIÇ.** Overview of in-situ applicable nitrate removal processes. *Desalination,* 2007, vol. 204 (5), 1-3
- **A. BOLEY ; W.R. MÜLLER ; G. HAIDER.** Biodegradable polymers as solid substrate and biofilm carrier for denitrification in recirculated aquaculture systems. *Aquacul. Eng.,* 2002, vol. 22, 75-85
- **WEIZHONG WU ; FEIFEI YANG ; LUHUA YANG.** Biological denitrification with a novel biodegradable polymer as carbon source and biofilm carrier. *Biores. Tech.,* 2012, vol. 118, 136-140
- **TILL, B.A. ; WEATHERS, L.J. ; ALVAREZ, P.J.J.** Fe(O)-supported autotrophic denitrification. *Environmental Science and Technology,* 1998, vol. 32 (5), 634-639
- **BARIC et al.** Coupling of polyhydroxybutyrate (PHB) and zero valent iron (ZVI) for enhanced treatment of chlorinated ethanes in permeable reactive barriers (PRBs). *Chem. Ing. J.,* 2012, 195-196, 22-30
- PHB and zero valent iron (ZVI) for enhanced treatment of chlorinated ethanes in permeable reactive barriers (PRBs). *Chem. Ing. J.,* 2012, vol. 22-30, 195-196
- **D.R. BURRIS ; R.M. ALLEN-KING ; V.S. MANORANJAN ; T.J. CAMPBELL ; G.A. LORAINE ; B. DENG.** Chlorinated ethene reduction by cast iron Sorption and mass transfer. *Journal of Environmental Engineering,* 1998, 1012-1019
- **VANSTONE N. ; PRZEPIORA A. ; VOGAN J. ; LACRAMPE-COULOUME G. ; POWERS B. ; PEREZ E. ; MABURY S. ; SHERWOOD LOLLAR B.** Monitoring trichloroethene remediation at an iron permeable reactive barrier using stable carbon isotopic analysis. *Journal of Contaminant Hydrology,* 2004, vol. 78 (4), 313-325